(19) Europäisches Patentamt
European Patent Office
Office européen des brevets

(11) Veröffentlichungsnummer: **0 196 536**
**B1**

(12) # EUROPÄISCHE PATENTSCHRIFT

(45) Veröffentlichungstag der Patentschrift: **18.01.89**

(51) Int. Cl.⁴: **C 09 B 62/08**, C 09 B 62/507, D 06 P 1/38

(21) Anmeldenummer: **86103587.1**

(22) Anmeldetag: **17.03.86**

(54) **Wasserlösliche Azoverbindungen, Verfahren zu deren Herstellung und ihre Verwendung als Farbstoffe.**

(30) Priorität: **21.03.85 DE 3510180**

(43) Veröffentlichungstag der Anmeldung: **08.10.86 Patentblatt 86/41**

(45) Bekanntmachung des Hinweises auf die Patenterteilung: **18.01.89 Patentblatt 89/3**

(84) Benannte Vertragsstaaten: **CH DE FR GB IT LI**

(56) Entgegenhaltungen:
**EP-A- 0 065 211**
**DE-B- 1 179 317**
**GB-A- 1 013 442**

(73) Patentinhaber: **HOECHST AKTIENGESELLSCHAFT, Postfach 80 03 20, D-6230 Frankfurt am Main 80 (DE)**

(72) Erfinder: **Segal, Marcos, Dr., Berliner Strasse 10, D-6238 Hofheim am Taunus (DE)**
Erfinder: **Kunze, Michael, Dr., Platanenweg 1a, D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 196 536 B1

ACTORUM AG

**Beschreibung**

Die Erfindung liegt auf dem technischen Gebiet der faserreaktiven Farbstoffe.

Aus der Europäischen Patentanmeldungs-Veröffentlichung Nr. 0 094 055A und aus den japanischen Patentanmeldungs-Veröffentlichungen Nrs. Sho-57-42986, Sho-58-46185 und Sho-58-46186 sind faserreaktive Azofarbstoffe bekannt, die einen faserreaktiven Rest aus der Vinylsulfonreihe und einen weiteren faserreaktiven Rest aus der Monochlortriazin-Reihe enthalten. Die beschriebenen Farbstoffe besitzen jedoch gewisse Mängel, wie z.B. ungenügende Nasslicht- und Schweisslichtechtheiten.

Desweiteren sind aus der EP-A-0 065 211 Monoazofarbstoffe mit dem 2-Sulfo-4-methyl-anilin als Diazokomponente und dem 1-Amino-3,6- und -4,6-disulfo-8-naphthol als Kupplungskomponente, an deren Aminogruppe ein kombinierter faserreaktiver Rest aus Chlortriazin und einem Rest der Vinylsulfonreihe gebunden ist, bekannt.

Mit der vorliegenden Erfindung wurden nunmehr neue wertvolle wasserlösliche Azoverbindungen gefunden, die der allgemeinen Formel (1)

$$A — N = N — K — Z \qquad (1)$$

entsprechen. In dieser Formel bedeuten:

A ist der Phenylrest, der durch Substituenten, bevorzugt 1 oder 2 Substituenten, substituiert sein kann, die der Gruppe der Substituenten Alkyl von 1 bis 4 C-Atomen, wie Methyl und Ethyl, Alkoxy von 1 bis 4 C-Atomen, wie Methoxy und Ethoxy, Carboxy, gegebenenfalls durch Chlor, Brom, Sulfo, Sulfato, Carboxy und/oder Hydroxy substituierte Alkanoylamino von 2 bis 5 C-Atomen, hiervon bevorzugt Acetylamino, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenylsulfamoyl, N-Phenyl-N-($C_1$-$C_4$-alkyl)-sulfamoyl, Cyan, Nitro, Chlor, Brom, Fluor, Trifluormethyl, Hydroxy und Sulfo angehören, oder

A ist ein Naphthylrest, der durch Substituenten, wie 1, 2 oder 3 Substituenten, substituiert sein kann, die der Gruppe der Substituenten Sulfo, Carboxy, Methyl, Ethyl, Methoxy, Ethoxy, gegebenenfalls durch Chlor, Brom, Sulfo, Sulfato, Carboxy und/oder Hydroxy substituiertes Alkanoylamino von 2 bis 5 C-Atomen, hiervon bevorzugt Acetylamino, Benzoylamino, Sulfobenzoylamino, Chlor, Hydroxy und Nitro angehören,

A ist ein Rest der allgemeinen Formel (2)

$$D — N = N — E — \qquad (2)$$

in welcher

D der Phenylrest ist, der durch Substituenten, bevorzugt 1 oder 2 Substituenten, substituiert sein kann, die der Gruppe der Substituenten Alkyl von 1 bis 4 C-Atomen, wie Methyl und Ethyl, Alkoxy von 1 bis 4 C-Atomen, wie Methoxy und Ethoxy, Carboxy, bevorzugt durch Chlor, Brom, Sulfo, Sulfato, Carboxy und/oder Hydroxy substituiertes Alkanoylamino von 2 bis 5 C-Atomen, hiervon bevorzugt Acetylamino, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenylsulfamoyl, N-Phenyl-N-($C_1$-$C_4$-alkyl)-sulfamoyl, Cyan, Nitro, Chlor, Brom, Fluor, Trifluormethyl, Hydroxy und Sulfo angehören, oder

D ein Naphthylrest ist, der durch Substituenten, wie 1, 2 oder 3 Substituenten, substituiert sein kann, die der Gruppe der Substituenten Sulfo, Carboxy, Methyl, Ethyl, Methoxy, Ethoxy, gegebenenfalls durch Chlor, Brom, Sulfo, Sulfato, Carboxy und/oder Hydroxy substituiertes Alkanoylamino von 2 bis 5 C-Atomen, hiervon bevorzugt Acetylamino, Benzoylamino, Sulfobenzoylamino, Chlor, Hydroxy und Nitro angehören, und

E der Rest einer kupplungsfähigen und diazotierbaren Verbindung ist, die beim Aufbau der Verbindungen (1) zunächst als Kupplungskomponente, dann als Diazokomponente dient,
und einen Phenylrest, bevorzugt 1,4-Phenylenrest, darstellt, der durch einen oder zwei Substituenten substituiert sein kann, die aus der Menge von 2 Alkyl von 1 bis 4 C-Atomen, 2 Alkoxy von 1 bis 4 C-Atomen, 2 Chlor, 1 Brom, 1 gegebenenfalls durch Chlor, Brom, Sulfo, Sulfato, Carboxy und/oder Hydroxy substituiertes Alkanoylamino von 2 bis 5 C-Atomen, hiervon bevorzugt Acetylamino, 1 Benzoylamino, 2 Sulfo, 1 Carboxy, 1 N,N-Dialkylamino mit Alkylgruppen von jeweils 1 bis 4 C-Atomen, wie Dimethylamino und Diethylamino, 1 Ureido, 1 Phenylureido und 1 Alkylsulfonylamino von 1 bis 4 C-Atomen ausgewählt sind, oder einen Naphthylenrest, wie beispielsweise den 1,4-Naphthylenrest, bedeutet, der durch 1 oder 2 Sulfogruppen oder durch eine Alkylgruppe von 1 bis 4 C-Atomen, eine Nitrogruppe, eine Alkanoylaminogruppe von 2 bis 5 C-Atomen, wie Acetylaminogruppe,
oder eine Benzoylaminogruppe oder der durch 1 oder 2 Sulfonylgruppen und eine Alkylgruppe von 1 bis 4 C-Atomen, eine Nitrogruppe, Alkanoylaminogruppe von 2 bis 5 C-Atomen oder Benzoylaminogruppe substituiert sein kann,
oder einen Naphthylenrest darstellt, der in ortho-Stellung zur Azogruppe des Restes der Formel (2) eine Aminogruppe, eine Alkylaminogruppe von 1 bis 4 C-Atomen oder eine gegebenenfalls durch Chlor, Alkyl von 1 bis 4 C-Atomen, Alkoxy von 1 bis 4 C-Atomen, Sulfo und/oder Carboxy substituierte Phenylaminogruppe oder eine Hydroxygruppe gebunden enthält und der durch keine weiteren Substituenten substituiert ist oder zusätzlich bevorzugt durch eine oder zwei Sulfogruppen oder durch eine Alkylgruppe von 1 bis 4 C-Atomen, eine Nitrogruppe, eine Alkanoylaminogruppe von 2 bis 5 C-Atomen, wie Acetylaminogruppe, oder eine Benzoylamino- oder Sulfobenzoylaminogruppe oder zusätzlich durch eine oder zwei Sulfogruppen und eine Alkylgruppe von 1 bis 4 C-Atomen, Nitrogruppe, Alkanoylaminogruppe von 2 bis 5 C-Atomen, wie Acetylaminogruppe, oder eine Benzoylamino- oder Sulfobenzoylaminogruppe substituiert ist;

K ist ein 1-Hydroxy-naphthylen-Rest, der in

2-Stellung die Azogruppe gebunden enthält, oder ist ein 2-Hydroxy-naphthylen-Rest, der in 1-Stellung die Azogruppe gebunden enthält, die beide durch 1 oder 2 Sulfogruppen oder durch eine gegebenenfalls durch Chlor, Brom, Sulfo, Sulfato, Carboxy und/oder Hydroxy substituierte Alkanoylaminogruppe von 2 bis 5 C-Atomen oder eine Benzoylaminogruppe oder durch eine oder zwei Sulfogruppen und eine gegebenenfalls durch Chlor, Brom, Sulfo, Sulfato, Carboxy und/oder Hydroxy substituierte Alkanoylaminogruppe von 2 bis 5 C-Atomen oder eine Benzoylaminogruppe substituiert sein können, oder

K ist ein Naphthylenrest, der durch 1 oder 2 Sulfogruppen substituiert sein kann, bevorzugt substituiert ist, oder durch 1 oder 2 Sulfogruppen und eine gegebenenfalls mono- oder disubstituierte Aminogruppe substituiert sein kann, wobei die Substituenten der Aminogruppen der Gruppe der Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit Alkylresten von jeweils 1 bis 4 C-Atomen, Phenylalkyl mit einem Alkylrest von 1 bis 4 C-Atomen, wobei der Phenylrest durch Methyl, Ethyl, Methoxy, Ethoxy, Chlor, Sulfo und/oder Carboxy substituiert sein kann, Phenyl und durch Alkyl von 1 bis 4 C-Atomen, Alkoxy von 1 bis 4 C-Atomen, Chlor, Carboxy und/oder Sulfo substituiertes Phenyl angehören, oder

K ist ein 1-Amino-naphthylen-Rest, der in 2-Stellung die Azogruppe gebunden enthält, oder ist ein 2-Amino-naphthylen-Rest, der in 1-Stellung die Azogruppe gebunden enthält, wobei beide Aminonaphthylenreste durch 1 oder 2 Sulfongruppen substituiert sein können, bevorzugt substituiert sind, oder durch eine Hydroxygruppe in 5-, 6-, 7- oder 8-Stellung oder durch diese Hydroxygruppe und 1 oder 2 Sulfogruppen substituiert sein können, oder ist ein Phenylenrest, wie der 1,3- oder 1,4-Phenylenrest, der durch 1 oder 2 Substituenten substituiert sein kann, wobei die Substituenten aus der nachfolgenden Menge von Substituenten ausgewählt sind: 2 Alkyl von 1 bis 4 C-Atomen, 2 Alkoxy von 1 bis 4 C-Atomen, 2 Chlor, 1 Brom, 1 gegebenenfalls durch Chlor, Brom, Sulfo, Sulfato, Carboxy und/oder Hydroxy substituiertes Alkanoylamino von 2 bis 5 C-Atomen, hiervon bevorzugt Acetylamino, 1 Benzoylamino, 1 Sulfo, 1 Carboxy, 1 Ureido, 1 Phenylureido, 1 Alkylsulfonylamino von 1 bis 4 C-Atomen, 1 Amino und 1 mono- oder disubstituiertes Amino, dessen Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit Alkylresten von jeweils 1 bis 4 C-Atomen, Phenylalkyl mit einem Alkylrest von 1 bis 4 C-Atomen, wobei dessen Phenylrest durch Methyl, Ethyl, Methoxy, Ethoxy, Chlor, Carboxy und/oder Sulfo substituiert sein kann, Phenyl und durch Alkyl von 1 bis 4 C-Atomen, Alkoxy von 1 bis 4 C-Atomen, Chlor, Carboxy und/oder Sulfo substituiertes Phenyl sind, wie hiervon Alkylamino von 1 bis 4 C-Atomen, wie Methylamino und Ethylamino, und N,N-Dialkylamino mit Alkylgruppen von jeweils 1 bis 4 C-Atomen, wie Dimethylamino und Diethylamino;

Z ist ein Rest der allgemeinen Formel (3)

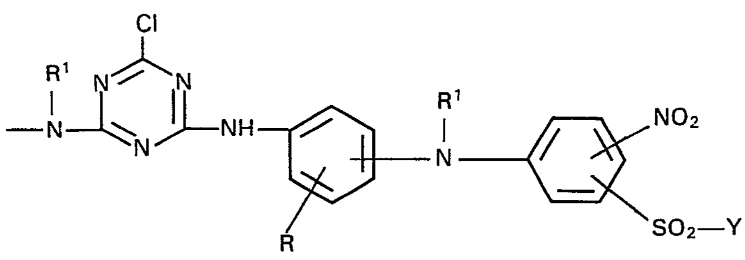

(3)

in welcher

$R^1$ für ein Wasserstoffatom oder eine gegebenenfalls durch einen oder zwei, bevorzugt einen, Substituenten aus der Gruppe Acetylamino, Hydroxy, Sulfato, Alkoxy von 1 bis 4 C-Atomen, Sulfo und Carboxy substituierte Alkylgruppe von 1 bis 4 C-Atomen steht, wobei beide $R^1$ zueinander gleiche oder voneinander verschiedene Bedeutungen besitzen können,

R ein Wasserstoffatom oder eine Sulfogruppe bedeutet und

Y die Vinylgruppe oder eine β-Thiosulfatoethyl-Gruppe, β-Phosphatoethyl-Gruppe, β-Chlorethyl-Gruppe oder bevorzugt eine β-Sulfatoethyl-Gruppe ist.

Im vorstehenden sowie im nachstehenden bedeuten Sulfogruppen Gruppen entsprechend der allgemeinen Formel $-SO_3M$, in welcher

M ein Wasserstoffatom oder ein Alkalimetall, wie Natrium, Kalium oder Lithium, oder das Äquivalent eines Erdalkalimetalls, wie des Calciums, bevorzugt jedoch ein Wasserstoffatom und insbesondere ein Alkalimetall ist,

desweiteren Carboxygruppen Gruppen der allgemeinen Formel -COOM, Phosphatogruppen Gruppen der allgemeinen Formel $-OPO_3M_2$, Thiosulfatogruppen Gruppen der allgemeinen Formel $-S-SO_3M$ und Sulfatogruppen Gruppen der allgemeinen Formel $-OSO_3M$, jeweils mit M der obengenannten Bedeutung.

Die erfindungsgemässen Azoverbindungen können in Form ihrer freien Säure und bevorzugt in Form ihrer Salze, insbesondere neutralen Salze, vorliegen; als Salze sind insbesondere die Alkalimetallsalze zu nennen. Die neuen Verbindungen finden bevorzugt in Form dieser Salze ihre Verwendung zum Färben und Bedrucken von hydroxy- und/oder carbonamidgruppenhaltigem Fasermaterial.

Substituenten in substituierten Alkanoylaminogruppen von 2 bis 5 C-Atomen sind beispielsweise Chlor, Brom, Sulfo, Sulfato, Carboxy und Hydroxy. Alkylgruppen von 1 bis 4 C-Atomen, die substituiert sind, sind beispielsweise solche, die durch einen oder zwei, bevorzugt einen, Substituenten aus der Gruppe Acetylamino, Hydroxy, Sulfato, Alkoxy von 1 bis 4 C-Atomen, Sulfo und Carboxy substituiert sind.

Bevorzugt ist der Formelrest A der Phenylrest, der durch 1, 2 oder 3, bevorzugt 1 oder 2, Substituenten aus der Gruppe Alkyl von 1 bis 4 C-Atomen, Alkoxy von 1 bis 4 C-Atomen, Chlor, Carboxy und Sulfo substituiert sein kann, bevorzugt substituiert ist, wobei bevorzugt mindestens einer dieser Substituenten eine Sulfogruppe ist. Bevorzugt ist A weiterhin ein Naphthylrest, der durch 1, 2 oder 3, bevorzugt 1 oder 2, Sulfogruppen substituiert ist.

Sofern A einen Rest der allgemeinen Formel (2) darstellt, ist D bevorzugt der Phenylrest, der durch 1, 2 oder 3, bevorzugt 1 oder 2, Substituenten aus der Gruppe Alkyl von 1 bis 4 C-Atomen, Alkoxy von 1 bis 4 C-Atomen, Chlor, Carboxy und Sulfo substituiert sein kann, bevorzugt substituiert ist, wobei bevorzugt mindestens einer dieser Substituenten eine Sulfogruppe ist, oder ein Naphthylrest, der durch 1, 2 oder 3, bevorzugt 1 oder 2, Sulfogruppen substituiert ist, und das Formelglied E bevorzugt ein 1-Hydroxy-naphthylen-Rest, der den Azorest D-N=N- in 2-Stellung gebunden enthält und durch 1 oder 2 Sulfogruppen substituiert ist, oder der 1,4-Phenylenrest, der durch eine Aminogruppe, eine Alkylaminogruppe von 1 bis 4 C-Atomen, Alkanoylaminogruppe von 2 bis 5 C-Atomen, wie Acetylaminogruppe, eine Methyl-, Ethyl-, Carboxy-, Sulfo- oder Ureidogruppe oder ein Chloratom oder durch eine dieser Substituenten und durch eine Methyl-, Ethyl-, Methoxy-, Ethoxy- oder Sulfogruppe oder ein Chloratom substituiert sein kann, oder ein 1,4-Naphthylenrest ist, der durch eine Alkanoylaminogruppe von 2 bis 5 C-Atomen oder eine Benzoylaminogruppe und/oder eine oder zwei Sulfogruppen substituiert sein kann.

Bevorzugt sind die Formelreste $R^1$ ein Wasserstoffatom oder eine Alkylgruppe von 1 bis 4 C-Atomen, wie insbesondere die Methyl- oder Ethylgruppe.

Bevorzugt ist Z ein Rest der Formel -NH-$Z^2$ mit $Z^2$ der später genannten Bedeutung.

Bevorzugt ist weiterhin A oder D ein Monosulfo- oder Disulfophenyl- oder ein Monosulfo-, Disulfo- oder Trisulfonaphthyl-Rest oder ein Benzolrest der allgemeinen Formel (4)

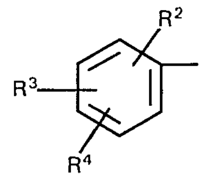

(4)

in welcher

$R^2$ ein Bromatom, eine Nitrogruppe oder die Alkanoylaminogruppe von 2 bis 5 C-Atomen, wie die Acetylaminogruppe, bevorzugt aber ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, ein Chloratom, oder eine Carboxygruppe bedeutet,

$R^3$ ein Bromatom oder eine Hydroxygruppe, bevorzugt aber ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, ein Chloratom, oder eine Sulfogruppe ist und

$R^4$ ein Wasserstoffatom oder bevorzugt eine Sulfogruppe bedeutet.

Die obigen Substituenten $R^2$, $R^3$ und $R^4$ können zueinander gleiche oder voneinander verschiedene Bedeutungen besitzen.

Die vorliegende Erfindung betrifft weiterhin Verfahren zur Herstellung der Azoverbindungen der Formel (1). Diese können erfindungsgemäss hergestellt werden, indem man eine Verbindung der allgemeinen Formel (5)

$$A—N=N—K—\overset{\displaystyle R^1 \atop |}{N}\text{-H} \qquad (5)$$

mit A, K und $R^1$ der obengenannten Bedeutungen, die in an und für sich üblicher und bekannter Weise der Diazotierung und Kupplung der entsprechenden Komponenten hergestellt werden kann, mit einer Dichlortriazin-Verbindung der allgemeinen Formel (6)

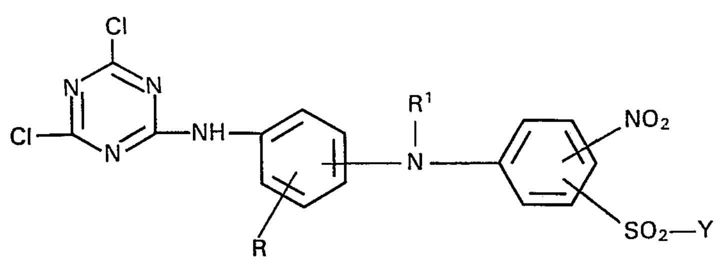

(6)

in welcher $R^1$, R und Y die obengenannten Bedeutungen haben, unter Abspaltung eines Mols Chlorwasserstoff umsetzt, oder dass man eine Verbindung der allgemeinen Formel (7)

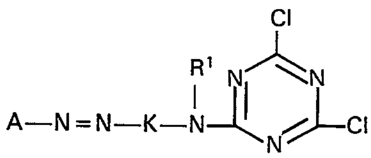

(7)

mit A, K und $R^1$ der obengenannten Bedeutung, die in an und für sich üblicher Weise durch Umsetzung der Verbindung (5) mit 2,4,6-Trichlor-s-triazin (Cyanurchlorid) hergestellt werden kann, mit einer Aminodiphenylamin-Verbindung der allgemeinen Formel (8)

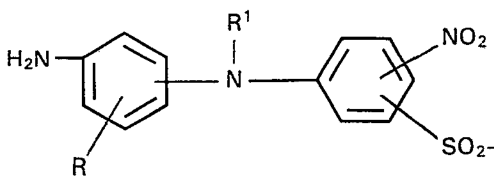

(8)

in welcher $R^1$, R und Y die obengenannten Bedeutungen haben, unter Abspaltung eines Mols Chlorwasserstoff umsetzt.

Die erfindungsgemässe Verfahrensvariante der Umsetzung einer Verbindung der allgemeinen Formel (5) mit einer Verbindung der allgemeinen Formel (6) kann in wässrig-organischem Medium durchgeführt werden; bevorzugt erfolgt sie in wässriger Lösung. Die Reaktionstemperatur liegt in der Regel zwischen 0 und 50°C, bevorzugt zwischen 25 und 45°C, insbesondere zwischen 35 und 40°C. In der Regel wird ein pH-Wert zwischen 4 und 8, bevorzugt zwischen 5 und 7, eingehalten.

Die Kondensationsreaktion der Umsetzung einer Amino-Azoverbindung der allgemeinen Formel (5) mit Cyanurchlorid zur Ausgangsverbindung (7) erfolgt in der Regel in wässriger, neutraler bis saurer Lösung bei einer Temperatur zwischen −10°C und +20°C, vorzugsweise bei einer Temperatur zwischen 5 und 10°C und einem pH-Wert von 4 bis 6. Die erfindungegemässe Kondensationsreaktion der Umsetzung der Dichlortriazin-Azoverbindung der allgemeinen Formel (7) mit der Aminodiphenylaminverbindung der allgemeinen Formel (8) erfolgt in der Regel anschliessend, bevorzugt ohne weitere Isolierung der zuvor hergestellten Verbindung (7) aus dem Reaktionsansatz, in wässrig-organischer Lösung, bevorzugt wässriger, neutraler bis saurer Lösung in der Regel bei einer Temperatur zwischen 0 und 50°C, bevorzugt zwischen 10 und 40°C, und bevorzugt bei einem pH-Wert zwischen 3 und 7, insbesondere zwischen 5 und 6.

Die zur Herstellung der Ausgangsverbindungen der allgemeinen Formel (5) oder (7) dienenden Diazokomponenten entsprechend einer allgemeinen Formel $A\text{-}NH_2$ sind beispielsweise Verbindungen der allgemeinen Formel (9a) bis (9h)

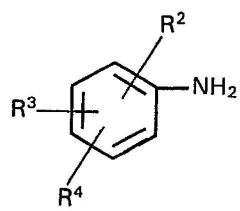

(9a)

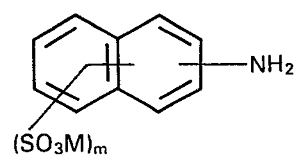

(9b)

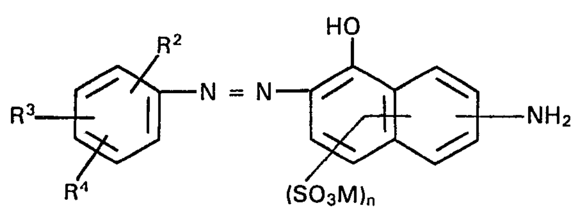

(9c)

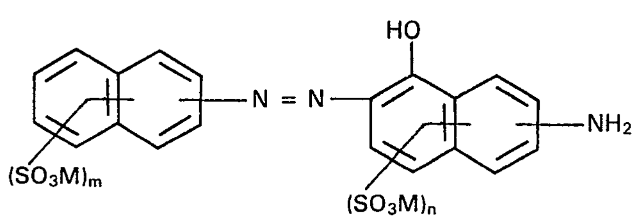

(9d)

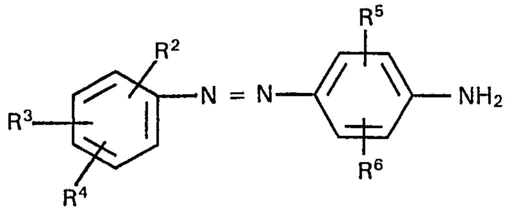

(9e)

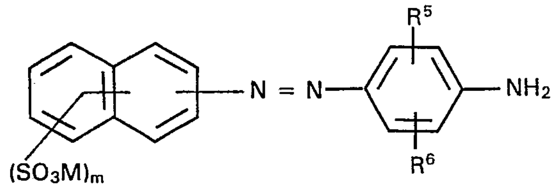

(9f)

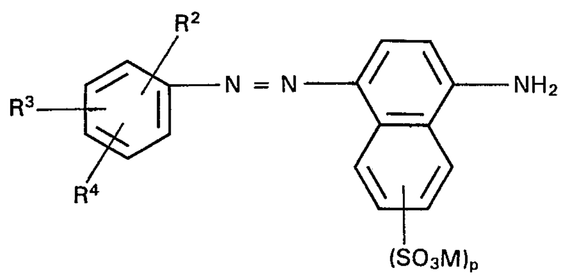

(9g)

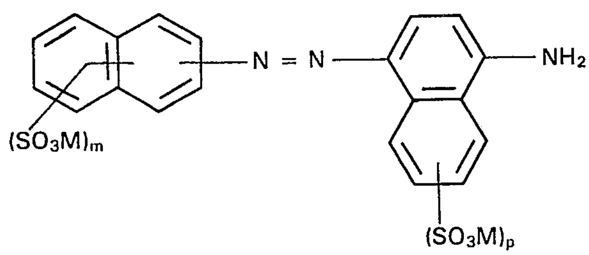

(9h)

in welcher

M, $R^2$, $R^3$ und $R^4$ die obengenannten Bedeutungen haben,

m für die Zahl 1, 2 oder 3 steht,

n die Zahl 1 oder 2 bedeutet,

p die Zahl Null, 1 oder 2 ist,

$R^5$ ein Wasserstoffatom, eine Sulfogruppe, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere Methoxygruppe, ein Chloratom oder ein Bromatom ist,

$R^6$ ein Wasserstoffatom, eine Sulfogruppe, eine Alkylgruppe von 1 bis 4 C-Atomen, wie die Ethylgruppe und insbesondere Methylgruppe, eine Alkoxygruppe von 1 bis 4 C-Atomen, wie die Ethoxygruppe und insbesondere Methoxygruppe, ein Chloratom, ein Bromatom, eine Alkanoylaminogruppe, wie die Acetylaminogruppe, die Aminogruppe, eine Alkylaminogruppe von 1 bis 4 C-Atomen, eine Dialkylaminogruppe mit Alkylresten von jeweils 1 bis 4 C-Atomen, die Ureidogruppe oder eine Alkylsulfonylaminogruppe von 1 bis 4 C-Atomen bedeutet

und die diazotierbare Aminogruppe in den Formeln (9c) und (9d) in 5-, 6- oder 7-Stellung des 1-Naphtholrestes gebunden ist.

Kupplungskomponenten der allgemeinen Formel $H\text{-}K\text{-}NHR^1$ mit K und $R^1$ der obengenannten Bedeutung, die zur Herstellung der Ausgangsverbindungen der allgemeinen Formel (5) und (7) dienen können, sind beispielsweise Verbindungen der allgemeinen Formel (10a), (10b) und (10c)

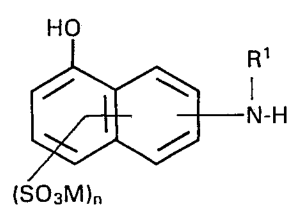

(10a)

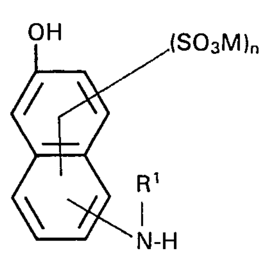

(10b)

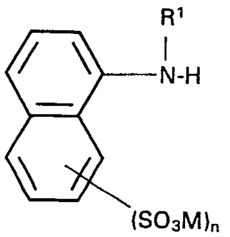

(10c)

in welchen M, $R^1$ und n die obengenannten Bedeutungen haben.

Aus Kombinationen der obengenannten Diazokomponenten entsprechend den allgemeinen Formeln (9) und der Kupplungskomponenten der allgemeinen Formeln (10) mit dem Rest des Cyanurchlorids und dem Rest des Aminodiphenylamins der allgemeinen Formel (8) oder mit dem Dichlortriazinylaminodiphenylamin-Rest der allgemeinen Formel (7) ergeben sich bevorzugte Monoazo- und Disazoverbindungen der allgemeinen Formel (1).

Die neuen Azoverbindungen der allgemeinen Formel (1) können zum Teil erfindungsgemäss auch in der Weise hergestellt werden, dass man eine Diazoniumverbindung eines Amins der allgemeinen Formel A-$NH_2$ mit A der obengenannten Bedeutung mit einer kupplungsfähigen Verbindung der allgemeinen Formel H-K-Z mit K und Z der obengenannten Bedeutung kuppelt. Hierbei ist Voraussetzung, wie dem Fachmann geläufig, dass die faserreaktive Gruppe Z als ein Acylaminorest nicht in einer Stellung der Kupplungskomponente H-K-Z gebunden ist, die die Kupplung behindert, wie beispielsweise eine in 1-Stellung durch Z substituierte naphthalinsulfonsäure. Kupplungskomponenten der allgemeinen Formel H-K-Z sind beispielsweise Verbindungen der allgemeinen Formel (11a) bis (11e)

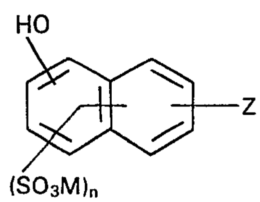

(11a)

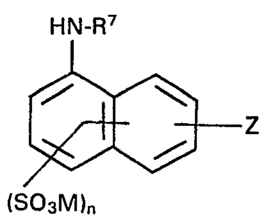

(11b)

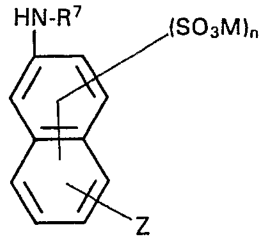

(11c)

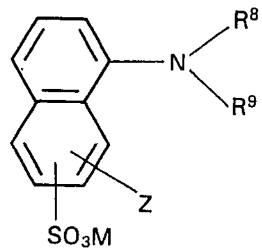

(11d)

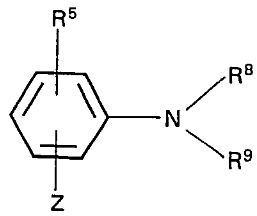

(11e)

in welchen

M, Z, $R^5$ und n die obengenannten Bedeutungen haben,

$R^7$ für ein Wasserstoffatom, eine Alkylgruppe von 1 bis 4 C-Atomen oder einen gegebenenfalls durch Chlor, Methyl, Ethyl, Methoxy, Ethoxy, Sulfo und/oder Carboxy substituierten Phenylrest steht,

$R^8$ ein Wasserstoffatom bedeutet oder eine Alkylgruppe von 1 bis 4 C-Atomen, die durch eine Hydroxy-, Carboxy-, Sulfo-, Sulfato-, Carbomethoxy- oder Carbethoxygruppe substituiert sein kann, und

$R^9$ ein Wasserstoffatom oder eine Alkylgruppe von 1 bis 4 C-Atomen ist, die durch eine Hydroxy-, Cyano-, Carboxy-, Sulfo-, Sulfato-, Carbomethoxy- oder Carbethoxygruppe oder ein Phenylrest substituiert sein kann, oder ein Phenylrest ist, der durch Alkyl von 1 bis 4 C-Atomen, Alkoxy von 1 bis 4 C-Atomen, Chlor und/oder Sulfo substituiert sein kann,

wobei der Rest Z in Formel (11e) bevorzugt in meta-Stellung zur Aminogruppe -$NR^8R^9$ gebunden ist.

Die Ausgangsverbindungen der allgemeinen Formel (11) lassen sich in an und für sich üblicher Weise aus den Aminonapthalin- und Anilinverbindungen, in denen anstelle des Formelrestes Z in den Formeln (11) die Aminogruppe steht, mit Cyanurchlorid und der Aminodiphenylamin-Verbindung der allgemeinen Formel (8) herstellen. So erfolgt beispielsweise die Synthese der Verbindungen der allgemeinen Formel H-K-Z durch Umsetzung einer Verbindung der

allgemeinen Formel H-K-$NHR^1$ mit einer Dichlortriazinylamino-diphenylamin-Verbindung der allgemeinen Formel (6) in wässrig-organischem oder bevorzugt wässrigem Medium bei einer Temperatur zwischen 25 und 35°C und bei einem pH-Wert zwischen 5 und 6.

Sofern die oben erwähnten Kondensationsreaktionen zwischen den Aminoverbindungen und Cyanurchlorid oder einer Dichlortriazinylamino-Verbindung und einer Aminoverbindung in wässrig-organischem Medium erfolgt, ist das anteilige organische Lösemittel bevorzugt Aceton, Dioxan und Dimethylformamid.

Eine der als Ausgangsverbindungen dienenden Amino-diphenylamin-Verbindungen der allgemeinen Formel (8) ist in Form ihrer β-Hydroxyethylsulfonyl-Vorstufe bekannt (s. Deutsche Auslegeschrift 1 179 317, Beispiel 5). Andere Amino-diphenylamin-Verbindungen der Formel (8) lassen sich über diese β-Hydroxyethylsulfon-Vorstufe in analoger Weise mit Hilfe der entsprechenden isomeren Acylamino-anilin- und (β-Hydroxyethylsulfonyl)-nitro-chlorbenzol-Verbindungen leicht herstellen. So erhält man beispielsweise das 4-Amino-2'-(β-hydroxyethylsulfonyl)-5'-nitro-diphenylamin durch Umsetzung von 1,4-Phenylendiamin und 2-Chlor-5-nitrophenyl-(β-hydroxyethyl)-sulfon in methanolischer Lösung bei einer Temperatur zwischen 50 und 70°C innerhalb weniger Stunden, das sich aus der Reaktionslösung nach Abkühlen auf Raumtemperatur und Zugabe von Eiswasser kristallin in hoher Ausbeute abscheidet.

Aus diesen β-hydroxyethylsulfonyl-substituierten Aminodiphenylamin-Ausgangsverbindungen lassen sich die faserreaktiven Ausgangsverbindungen der allgemeinen Formel (8) in der für die Synthese von faserreaktiven Gruppen der Vinylsulfonreihe üblichen Weise synthetisieren. Bevorzugt werden sie zunächst in deren Sulfatoderivate durch Umsetzung mit einem Sulfatierungsmittel analog bekannten Verfahrensweisen übergeführt. Sulfatierungsmittel sind beispielsweise 96 bis 100%ige oder Schwefeltrioxid enthaltende Schwefelsäure oder Chlorsulfonsäure in einem organischen Lösemittel, wie Pyridin oder N-Methyl-pyrrolidon. Analoge Sulfatierungsreaktionen dieser Art sind beispielsweise aus der bereits genannten DE-AS 1 179 317 sowie aus der britischen Patentschrift Nr. 1 540 566 und der europäischen Patentanmeldungs-Veröffentlichung Nr. 0 036 383 bekannt. Bevorzugt erfolgt die Sulfatierung der β-Hydroxyethylsulfonyl-Ausgangsverbindung zur entsprechenden Verbindung der allgemeinen Formel (8), in welcher Y für die β-Sulfatoethyl-Gruppe steht, in 100%iger Schwefelsäure bei Temperaturen zwischen 10 und 30°C. Hieraus lässt sich die wasserlösliche bzw. in Schwefelsäure lösliche Sulfatoverbindung nach Eintragen der Schwefelsäure-Lösung in Eiswasser isolieren.

In analoger Weise lassen sich die Verbindungen der allgemeinen Formel (8), in welchen Y für die β-Phosphatoethyl-Gruppe steht, durch Umsetzung mit einem geeigneten und hierfür üblichen Phosphatierungsmittel, wie Phosphorsäure, Polyphosphorsäure oder Phosphorpentachlorid, herstellen.

Aus den β-Sulfatoethylsulfonyl-Verbindungen der allgemeinen Formel (8) erhält man die entsprechenden Vinylsulfonyl-Verbindungen [mit Y gleich der Vinylgruppe in Formel (8)] durch Umsetzung mit einem Alkali in wässriger Lösung, beispielsweise indem man eine Lösung der Sulfatoverbindung in alkalischwässriger Lösung bei einem pH-Wert zwischen 8 und 10 und bei einer Temperatur zwischen etwa 40 und 60°C für kurze Zeit behandelt.

Aus diesen Vinylsulfonyl-Verbindungen der allgemeinen Formel (8) lassen sich die entsprechenden β-Thiosulfatoethylsulfonyl-Verbindungen durch Umsetzung mit einem Alkalithiosulfat herstellen, so beispielsweise durch Umsetzung der Vinylsulfonyl-Verbindung der Formel (8) mit Natriumthiosulfat, vorteilhaft im Überschuss, wie in 21 bis 40%igem Überschuss, in wässriger schwach saurer Lösung bei einer Temperatur zwischen 30 und 80°C.

Amino-diphenylamin-Ausgangsverbindungen der allgemeinen Formel (8) sind beispielsweise 1-Nitro-2-(4'-amino-phenylamino)-5-(β-sulfatoethylsulfonyl)-benzol, 1-Nitro-4-(4'-amino-phenylamino)-5-(β-sulfatoethylsulfonyl)-benzol, 1-Nitro-2-(3'-amino-phenylamino)-5-(β-sulfatoethylsulfonyl)-benzol, 1-Nitro-2-(4'-amino-3'-sulfo-phenylamino)-5-(β-sulfatoethylsulfonyl)-benzol und 1-Nitro-2-(4'-amino-2'-sulfo-phenylamino)-5-(β-sulfatoethylsulfonyl)-benzol.

Aromatische Amine der allgemeinen Formel A-$NH_2$ und D-$NH_2$, die als Diazokomponenten zur Synthese der erfindungsgemässen Verbindungen dienen können, sind beispielsweise 1-Aminobenzol-2-sulfonsäure, 1-Aminobenzol-3- und -4-sulfonsäure, 2-Amino-4-sulfobenzoesäure, 2-Amino-5-sulfobenzoesäure, 4-Amino-2-sulfo-benzoesäure, 4-Amino-toluol-2- und -3-sulfonsäure, 2-Amino-toluol-4- und -5-sulfonsäure, 2-Aminotoluol-4-carbonsäure, Anthranilsäure, 4-Amino-benzoesäure, 2-Amino-anisol-4- und -5-sulfonsäure, 4-Amino-anisol-2- und -3-sulfonsäure, 3-Chlor-2-amino-3-toluol-5-sulfonsäure, 4-Chlor-2-amino-toluol-5-sulfonsäure, 5-Chlor-2-amino-toluol-3- und -4-sulfonsäure, 6-Chlor-2-amino-toluol-4-sulfonsäure, 6-Chlor-3-amino-toluol-4-sulfonsäure, 1-Amino-benzol-2,5-disulfonsäure, 1-Aminobenzol-2,4- und -3,5-disulfonsäure, 2-Amino-toluol-3,5-disulfonsäure, 2-Aminotoluol-4,5- und -4,6-disulfonsäure, 4-Amino-toluol-2,5-disulfonsäure, 2-Aminonaphthalin-1-sulfonsäure, 2-Aminonaphthalin-5- und -6-sulfonsäure, 2-Aminonaphthalin-7- und -8-sulfonsäure, 1-Aminonaphthalin-2-, -3-, -4-, -5-, -6-, -7- und -8-sulfonsäure, 2-Aminonaphthalin-4,8-disulfonsäure, 2-Aminonaphthalin-6,8-disulfonsäure, 2-Amino-naphtalin-1,5- und -1,7-disulfonsäure, 2-Amino-naphthalin-5,7-, -3,6-, -3,7- und -4,7-disulfonsäure, 1-Aminonaphthalin-2,4-, -2,5-, -3,6-, -3,7-, -3,8-, -4,6-, -4,7-, -4,8-, -5,7- und -6,8-disulfonsäure, 2-Aminonaphthalin-3,6,8-trisulfonsäure, 2-Amino-naphthalin-4,6,8- und -1,5,7-trisulfonsäure, 1-Amino-naphthalin-2,4,7-trisulfonsäure, 1-Amino-naphthalin-2,4,8-, -3,5,7-, -3,6,8- und -4,6,8-trisulfonsäure.

Verbindungen entsprechend der allgemeinen Formel H-E-$NH_2$, die zur Herstellung der erfindungsgemässen Disazoverbindungen dienen können, sind beispielsweise Anilin, 3-Methylanilin, 3-Chloranilin, 2,5-Dimethylanilin, 2,5-Dimethoxyanilin, 3-Methoxyanilin, 3-Methyl-6-methoxy-anilin, 3-Aminophenyl-harnstoff, 3-Acetylamino-6-methyl-anilin, 2-Amino-4-acetylaminobenzol-1-sulfonsäure, 1,3-Diaminobenzol, 1,3-Diamino-4-methyl- oder -methoxy-benzol, 1,3-Diamino-benzol-4-sulfonsäure, 1-Aminonaphthalin, 1-Aminonaphthalin-6- oder -7-sulfonsäure, 3-Acetylamino-anilin, 2-Amino-8-naphthol-6-sulfonsäure, 2-Amino-8 naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-Amino-naphthalin-8-sulfonsäure, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol.

Weitere Ausgangsverbindungen, die der allgemeinen Formel H-K-NHR[1] entsprechen, sind beispielsweise Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methyl-anilin, 2-Amino-4-acetylamino-benzol-1-sulfonsäure, 1,3- Diaminobenzol, 1,3-Diamino-4-methyl- oder -methoxy-benzol, 1,3-Diamino-benzol-4-sulfonsäure, 1-Aminonaphthalin, 1-Aminonaphthalin-6- oder -7-sulfonsäure, 3-Acetylaminoanilin, 2-Amino-8-naphthol-6-sulfonsäure, 2-Amino-8-naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-Amino-naphthalin-8-sulfonsäure, 1-Amino-8-naphthol-3,6-disulfonsäure, 1-Amino-8-naphthol-4,6-disulfonsäure, 2-Methylanilin, 2-Methoxyanilin, 3-Benzoylaminoanilin, 2,3-Dimethylanilin, 3,5-Dimethylanilin, 1-Amino-2-methoxy-5-acetylamino-benzol, 3-Amino-N,N-dimethylanilin, 3-Amino-N,N-diethylanilin, 3-Amino-N,N-di-(β-sulfoethyl)-anilin, 3-Amino-N-methyl-N-(β-sulfoethyl)-anilin, N-Methyl-anilin, 3-Chlor-N-methyl-anilin, N-(β-Cyanoethyl)-anilin und N-Ethylanilin.

Kupplungskomponenten, die erfindungsgemäss zur Herstellung der Azoverbindungen der allgemeinen Formel (1) dienen können und die der allgemeinen Formel H-K-Z entsprechen, sind beispielsweise die nachfolgenden Aminonaphthol-sulfonsäuren, an deren (eine) Amino- oder Methylamino-Gruppe der faserreaktive Rest $Z^1$ der allgemeinen Formel (3a)

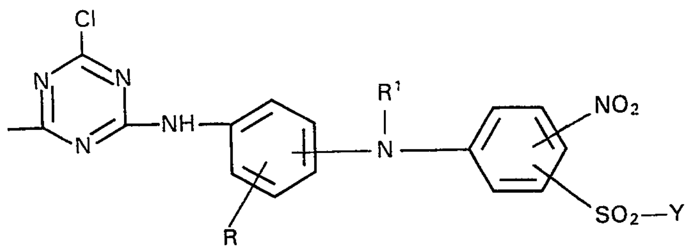

(3a)

in welcher

R, $R^1$, und Y die obengenannten Bedeutungen haben, gebunden ist:

1-Amino-3,6-disulfo-8-naphthol, 1-Amino-4,6-disulfo-8-naphthol, 2-Amino-3,6-disulfo-8-naphthol, 3-Amino-6-sulfo-8-naphthol, 3-Amino-4,6-disulfo-8-naphthol, 3-Methylamino-6-sulfo-8-naphthol, 1-Amino-7-sulfo-5-naphthol, 2-Amino-6-sulfo-8-naphthol, 1-Amino-4-sulfo-8-naphthol, 2-Methylamino-6-sulfo-8-naphthol, 2-Amino-5-naphthol-7-sulfonsäure, 1-Amino-2,4-disulfo-8-naphthol.

Von den erfindungsgemässen Azoverbindungen der allgemeinen Formel (1) können insbesondere solche Gruppen von Verbindungen hervorgehoben werden, die den allgemeinen Formeln (12), (13), (14), (15), (16), (17) entsprechen:

(12)

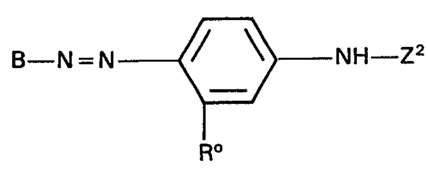

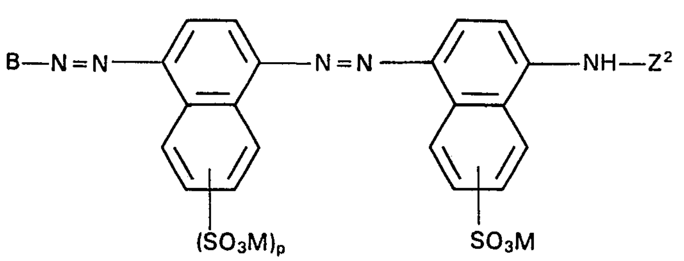

(13)

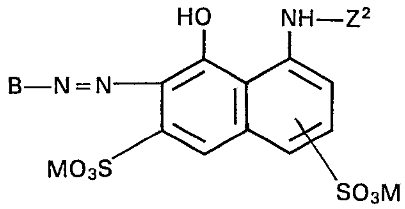

(14)

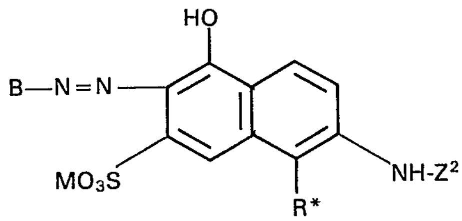

(15)

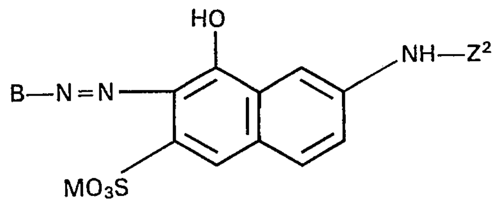

(16)

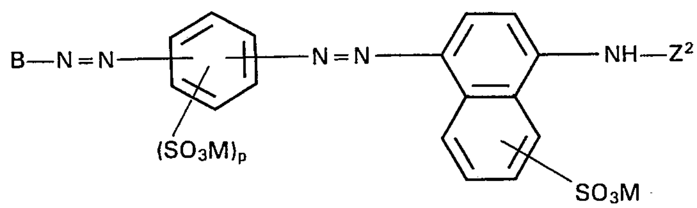

(17)

In diesen Formeln bedeuten:

M hat die obengenannte Bedeutung;

$Z^2$ ist ein Rest der allgemeinen Formel (3b)

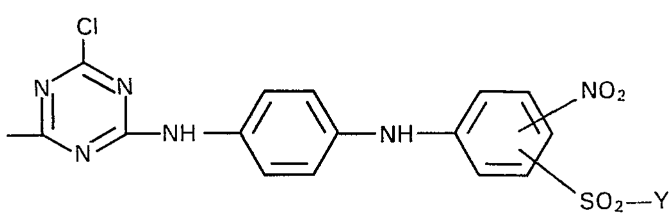

(3b)

in welcher

Y die obengenannte Bedeutung besitzt und die Gruppe $-SO_2-Y$ und die Nitrogruppe zueinander meta-ständig an den Benzolkern gebunden sind, jedoch beide nicht gleichzeitig ortho-ständig zur Aminogruppe stehen;

B ist ein Monosulfophenyl-, ein Disulfophenyl- oder Mono-sulfo-2-naphthyl-, ein Disulfo-2--naphthyl- oder ein Trisulfo-2-naphthyl-Rest oder ein Rest der oben genannten und definierten allgemeinen Formel (4);

p ist die Zahl Null, 1 oder 2;

R* ist ein Wasserstoffatom oder eine Sulfogruppe;

$R^0$ ist ein Wasserstoffatom, ein Chlor- oder Bromatom, eine Aminogruppe, eine Alkanolyaminogruppe von 2 bis 5 C-Atomen, wie Acetylaminogruppe, eine Sulfo-, Carboxy-, Methyl-, Ethyl-, Methoxy- oder Ureidogruppe.

Insbesondere bevorzugt ist in diesen Verbindungen der Formelrest Y eine β-Sulfatoethyl--Gruppe.

Von Verbindungen der allgemeinen Formel (12) sind insbesondere diejenigen hervorzuheben, in welcher R* für die Aminogruppe, die Acetylamino-, Sulfo-, Methoxy-, Methyl- oder Ureidogruppe steht.

Von den Verbindungen der allgemeinen Formel (14) sind insbesondere diejenigen bevorzugt, bei denen die eine Sulfogruppe bzw. eine der Sulfogruppen im Formelrest B in ortho-Stellung zur Azogruppe an den Benzol- bzw. Naphthalinkern gebunden ist.

In den Verbindungen der allgemeinen Formel (13) ist p bevorzugt die Zahl 1 oder 2.

Die Abscheidung und Isolierung der erfindungsgemäss hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknug, wobei dieser Reaktionslösung eine Puffersubstanz zugefügt werden kann.

Die erfindungsgemässsen Verbindungen der allgemeinen Formel (1) haben faserreaktive Eigenschaften und besitzen sehr gute Farbstoffeigenschaften. Sie können deshalb zum Färben (einschliesslich Bedrucken) von hydroxygruppenhaltigen und/oder carbonamidgruppenhaltigen Materialien verwendet werden. Auch können die bei der Synthese der erfindungsgemässen Verbindungen anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemässen Verbindungen der allgemeinen Formel (1) zum Färben (einschliesslich Bedrucken) von hydroxy- und/oder carbonamidgruppenhaltigen Materialien bzw. Verfahren zu deren Anwendung auf diesen Substraten. Eingeschlossen ist hierbei Massefärbung, wie bspw. von Folien aus Polyamid. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Celulosefasern sind beispielsweise Zellwolle und Viskosekunstseide.

Carbamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemässen Verbindungen der Formel (1) lassen sich, gemäss der erfindungsgemässen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Azoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wässrigem Bad bei Temperaturen zwischen 40 und 105°C, gegebenenfalls bei Temperaturen bis zu 130°C unter Druck, und gegebenenfalls in Gegenwart von üblichen Färbereihilfsmitteln. Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls gute Farbausbeuten und ein guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mittels einer die erfindungsgemässe Verbindung und Natriumbicarbonat oder ein anderes säurebindendes Mittel enthaltenden Druckpaste und anschliessendes Dämpfen bei 100 bis 103°C, oder zweiphasig, beispielsweise durch Bedrucken mittels einer die erfindungsgemässe Verbindung enthaltenden neutralen oder schwach sauren Druckpaste und anschliessendes Fixieren der erfindungsgemässen Verbindung entweder durch Hindurchführen des bedruckten Materials durch ein heisses alkali- und elektrolythaltiges Bad oder durch Überklotzen mit einer alkalischen elektrolythaltigen Klotzflotte und anschliessendes Verweilen dieses überklotzten Materials oder Dämpfen oder Behandlung mit Trockenhitze, durchgeführt werden können, erhält man farbstarke Drucke mit gutem Stand der Konturen und einem klaren Weissfond. Der Ausfall der Drucke ist von wechselnden Fixierbedingungen nur wenig abhängig. Sowohl in der Färberei als auch in der Druckerei sind die mit den erfindungsgemässen Verbindungen erhaltenen Fixiergrade sehr hoch.

Bei der Fixierung mittels Trockenhitze nach den üblichen Thermofixierverfahren verwendet man Heissluft von 120 bis 200°C. bei der Fixierung mittels Wasserdampf kann neben dem üblichen Wasserdampf von 101 bis 103°C auch überhitzter Dampf und Druckdampf von Temperaturen bis zu 160°C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und Erdalkalimetalle von organischen oder anorganischen Säuren oder Verbindungen, die in der Hitze Alkali freisetzen. Insbesondere sind die Alkalimetallhydroxide und Alkalimetallsalze von schwach bis mittelstarken anorganischen oder organischen Säuren zu nennen, vorzugsweise deren Natrium- und Kaliumverbindungen. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat.

Durch die Behandlung der erfindungsgemässen Verbindungen (Farbstoffe) mit den säurebindenden Mitteln, gegebenanfalls unter Wärmeeinwirkung, werden diese chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Nassechtheiten, zumal sich nicht fixierte Farbstoffanteile wegen ihrer guten Kaltwasserlöslichkeit auswaschen lassen.

Die mit den erfindungsgemässen Verbindungen (Farbstoffen) hergestellten Färbungen und Drucke auf Cellulosematerialien besitzen eine hohe Farbstärke, gute Lichtechtheiten und gute bis sehr gute Nassechtheiten, wie beispielsweise gute bis sehr gute Waschechtheiten bei 60 bis 95°C, auch in Gegenwart von Perboraten, saure und alkalische Walk-, Überfärbe- und Schweissechtheiten, gute bis sehr gute saure und alkalische Schweissechtheiten, eine hohe Dampfbeständigkeit, gute bis sehr gute Alkali-, Säure-, Wasser- und Seewasserechtheiten, desweiteren eine gute Plissierechtheit, Bügelechtheit und Reibechtheit. Ebenso besitzen sie eine sehr gute Säurelagerbeständigkeit («acid fading») beim Lagern von feuchtem, noch Essigsäure enthaltendem gefärbtem Material (s. hierzu deutsche Auslegeschrift Nr. 2 322 236).

Besonders hervorzuheben sind die guten Nasslichtechtheiten der mit destilliertem Wasser oder Trinkwasser befeuchteten Färbungen und Drucke auf Cellulosefasermaterialien sowie deren alkalische Schweisslichtechtheit. Diesbezüglich sind die erfindungsgemässen Farbstoffe den anfangs erwähnten bekannten und konstitutionell nächst vergleichbaren faserreaktiven Farbstoffen, die als Reaktivgruppe ebenfalls einen Monochlortriazin-Rest und eine faserreaktive Gruppe der Vinylsulfon-Reihe enthalten, in überraschender Weise überlegen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat, Natriumacetat und/oder Ammoniumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozess unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100°C durchgeführt, jedoch können sie auch in geschlossenen Färbeapparaturen bei Temperaturen bis zu 106°C erfolgen. Da die Wasserlöslichkeiten der Verbindungen der allgemeinen Formel (1) sehr gut ist, lassen sie sich auch mit Vorteil bei üblichen kontinuierlichen Färbeverfahren einsetzen. Die Farbstärke der erfindungsgemässen Verbindungen der allgemeinen Formel (1) ist sehr hoch. Sie liefern auf den Fasermaterialien, insbesondere beim reaktiven Färben von Wolle, farbstarke, echte Färbungen. Bei Anwendung von Färbetemperaturen von 100 bis 106°C ist eine hohe Baderschöpfung festzustellen.

Bei den mit den erfindungsgemässen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionell ähnlichen bekannten Farbstoffen zeigen sie in überraschender Weise einen sehr guten Farbaufbau, wobei die brillante Nuance in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso lässt sich Material aus Wollfasern unterschiedlicher Provenienz mit der erfindungsgemässsen Verbindung egal färben. Zur Verbesserung des Egalisierverhaltens kann gegebenenfalls ein übliches Egalisierhilfsmittel, wie beispielsweise N-Methyltaurin, zugesetzt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmässig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

*Beispiel 1*

a) Eine Lösung mit einem pH-Wert zwischen 4,5 und 5,0 und einer Temperatur zwischen 5 und 10°C von 62 Teilen 1-Amino-3,6-disulfo-8-naphthol in 600 Teilen Wasser wird unter Rühren portionsweise mit 36 Teilen Cyanurchlorid versetzt; der pH wird mit Natriumhydrogencarbonat bei 2,0 gehalten. Der Ansatz wird noch 4 Stunden bei einem Temperatur zwischen 5 und 10°C und einem pH-Wert von 2 weitergerührt.

b) Eine Suspension von 32 Teilen Anilin-2-sulfonsäure in 500 Teilen Eiswasser wird mit 45 Teilen konzentrierter wässriger Salzsäure versetzt; die Diazotierung erfolgt durch Zugabe von 40 Volumenteilen einer wässrigen 5n-Natriumnitritlösung. Man rührt noch 4 Stunden bei etwa 5°C nach und zerstört in üblicher Weise überschüssige salpetrige Säure mittels Amidosulfonsäure.

c) Die unter b) hergestellte Diazoniumsalzlösung gibt man langsam unter Rühren in die Lösung der unter a) hergestellten Kupplungskomponente, wobei man den pH-Wert zwischen 5,0 und 6,0 hält. Zur vollständigen Kupplung wird noch 6 Stunden nachgerührt, bei einem pH-Wert von 6 nachgerührt.

d) Zu der Lösung der Azoverbindung von c) werden unter Rühren 84 Teile 1-Nitro-2-(4'-aminophenylamino)-5-(β-sulfatoethylsulfonyl)-benzol gegeben; der pH-Wert wird zwischen 5,5 und 6,0 und die Temperatur bei 25°C gehalten. Man rührt den Ansatz acht Stunden nach, salzt die gebildete erfindungsgemässe Verbindung mit Natriumchlorid aus und isoliert sie durch Filtration; die erfindungsgemässe Verbindung kann auch durch Eindampfen oder Sprühtrocknen isoliert werden.

Es wird ein rotes, elektrolythaltiges Pulver erhalten, das das Natriumsalz der Azoverbindung der Formel

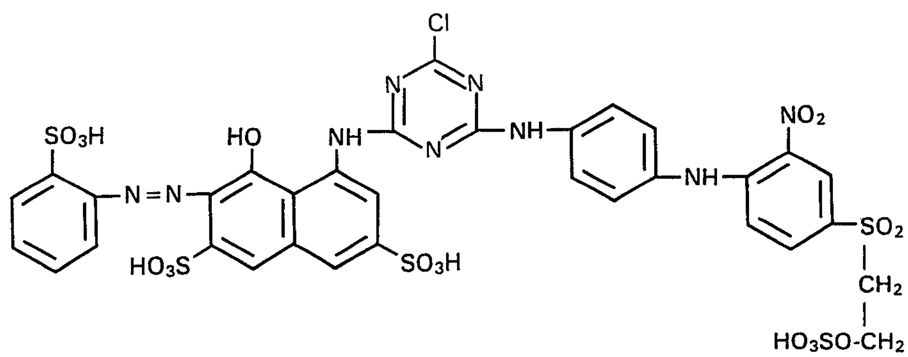

enthält. Die erfindungsgemässe Verbindung besitzt sehr gute Farbstoffeigenschaften und zeigt in wässriger Lösung ein Absorptionsmaximum bei 510 nm. Sie färbt die in der Beschreibung genannten Fasermaterialien nach den in der Technik üblichen Färbe- und Druckverfahren, insbesondere Cellulosefasermaterialien nach den Applikations- und Fixiermethoden für faserreaktive Farbstoffe, in gelbstichig roten Tönen. Insbesondere auf Cellulosefasermaterialien werden Färbungen mit sehr guten Nassechtheitseigenschaften erhalten, von denen insbesondere die guten Waschechtheiten und guten Nasslichtechtheitseigenschaften, wie insbesondere eine gute alkalische Schweisslichechtheit, so wie die guten Chlorwasserechtheiten hervorgehoben werden können.

*Beispiele 2 bis 17*

In den nachfolgenden Tabellenbeispielen sind weitere erfindungsgemässe Azoverbindungen entsprechend einer allgemeinen Formel (A)

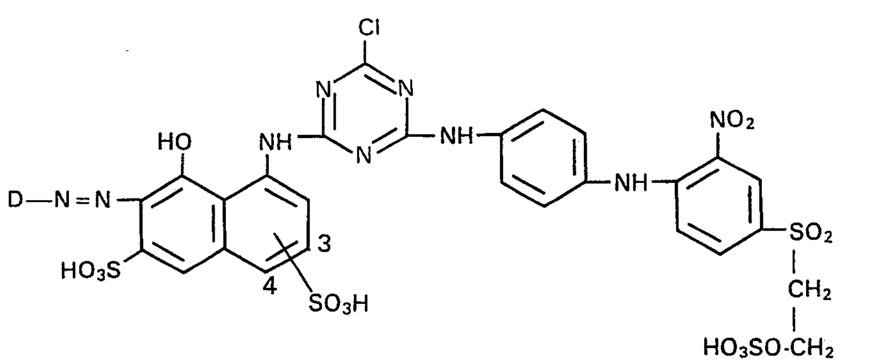

(A)

beschrieben. Sie lassen sich in erfindungsgemässer Weise, beispielsweise analog dem obigen Ausführungsbeispiel 1, aus den aus dieser Formel ersichtlichen Komponenten (wie der Diazoniumverbindung des aromatischen Amins, der Aminonaphtholsulfonsäure, Cyanurchlorid und 1-Nitro-2-(4'-aminophenylamino)-5-(β-sulfatoethylsulfonyl)-benzol)) herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit guten Echtheiten, wie beispielsweise den im Beispiel 1 angegebenen Echtheiten, in dem in dem jeweiligen Tabellenbeispiel angegebenen Farbton auf Baumwolle.

Azoverbindung entsprechend Formel (A)

| Beispiel | Aromat. Amin D-$NH_2$ | Stellung der Sulfogruppe | Farbton |
|---|---|---|---|
| 2 | Anilin-3-sulfonsäure | 3– | rot |
| 3 | Anilin-4-sulfonsäure | 3– | rot |
| 4 | Anilin-2,5-disulfonsäure | 3– | rot |
| 5 | Anilin-4-methyl-2-sulfonsäure | 3– | rot |
| 6 | Anilin-4-chlor-2-sulfonsäure | 3– | rot |
| 7 | 2-Naphthylamin-1,5-disulfonsäure | 3– | rot |
| 8 | 2-Naphthylamin-1-sulfonsäure | 3– | rot |
| 9 | 2-Naphthylamin-4,8-disulfonsäure | 3– | rot |
| 10 | 2-Naphthylamin-3,6,8-trisulfonsäure | 3– | rot |
| 11 | Anilin-2-carbonsäure | 3– | rot |
| 12 | Anilin-4-methoxy-2-sulfonsäure | 3– | rot |
| 13 | Anilin-4-sulfonamid | 3– | rot |
| 14 | Anilin-2-sulfonsäure | 4– | rot |
| 15 | Anilin-4-sulfonsäure | 4– | rot |
| 16 | Anilin-2,5-disulfonsäure | 4– | rot |
| 17 | 2-Naphthylamin-1,5-disulfonsäure | 4– | rot |

*Beispiel 18*

Zur Herstellung einer erfindungsgemässen Azoverbindung verfährt man gemäss den Angaben des Beispieles 1, setzt jedoch in dem Verfahrensabschnitt d) anstelle des 1-Nitro-2-(4'-aminophenylamino)-5-(β-sulfatoethylsulfonyl)-benzols das 1-Nitro-4-(4'-aminophenylamino)-5-(β-sulfatoethylsulfonyl)-benzol in äquivalenter Menge ein.

Es wird ein elektrolythaltiges rotes Pulver des Natriumsalzes der Verbindung der Formel

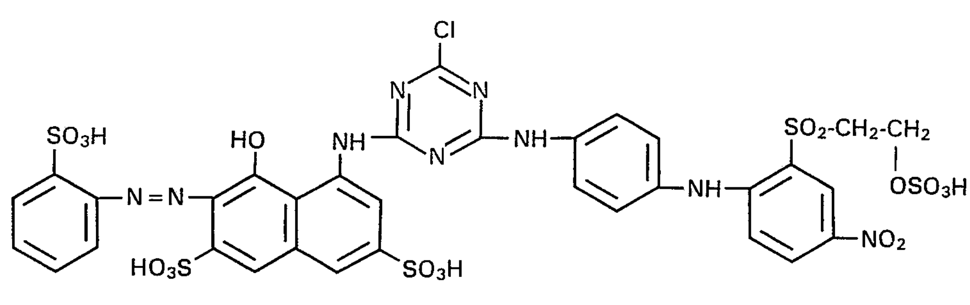

erhalten, die in wässriger Lösung bei 508 nm ein Absorptionsmaximum besitzt und sehr gute faserreaktive Farbstoffeigenschaften aufweist. Mit ihr werden nach den in der Technik üblichen Applikations- und Fixiermethoden für faserreaktive Farbstoffe auf den in der Beschreibung genannten Fasermaterialien, insbesondere Cellulosefasermaterialien, wie Baumwolle, echte und farbstarke rote Färbungen und Drucke erhalten; von den Echtheiten ist insbesondere die alkalische Schweisslichtechtheit hervorzuheben.

*Beispiele 19 bis 52*

In den nachfolgenden Tabellenbeispielen sind weitere erfindungsgemässe Azoverbindungen entsprechend einer allgemeinen Formel (B)

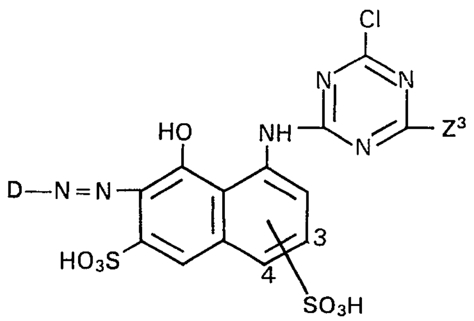

(B)

beschrieben, in welcher D dem Rest des aromatischen Amins D-$NH_2$ der Diazokomponente und $Z^3$ dem Amino-Rest des Amino-nitro-diphenylamins der in der Beschreibung genannten allgemeinen Formel (8) entspricht. Sie lassen sich in erfindungsgemässer Weise, bespielsweise analog dem obigen Ausführungsbeispiel 1, aus den aus der Formel ersichtlichen Komponenten [wie der Diazoniumverbindung des aromatischen Amins, der Aminonaphtholsulfonsäure, Cyanurchlorid und der Amino-nitro-diphenylamin-Verbindung H-$Z^3$ entsprechend der allgemeinen Formel (8)] herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit guten Echtheiten, wie beispielsweise den im Beispiel 1 angegebenen Echtheiten, in dem in dem jeweiligen Tabellenbeispiel angegebenen Farbton auf Baumwolle.

Azoverbindung entsprechend der Formel (B)

| Bsp. | Aromat. Amin D-$NH_2$ | Stellung der Suflogruppe | Amino-diphenylamin H-$Z^3$ entsprechend der Formel (8) | Farbton |
|---|---|---|---|---|
| 19 | Anilin-3-sulfonsäure | 3– | 1-Nitro-4-(4'-amino-phenylamin)-5-(β-sulfatoethyl-sulfonyl)-benzol | rot |
| 20 | Anilin-4-sulfonsäure | 3– | dito | rot |
| 21 | Anilin-2,5-disulfonsäure | 3– | dito | rot |
| 22 | Anilin-4-methyl-2-sulfonsäure | 3– | dito | rot |
| 23 | Anilin-4-chlor-2-sulfonsäure | 3– | dito | rot |
| 24 | 2-Naphthylamin-1,5-disulfonsäure | 3– | dito | rot |
| 25 | 2-Naphthylamin-4,8-disulfonsäure | 3– | dito | rot |
| 26 | 2-Naphthylamin-3,6,8-trisulfonsäure | 3– | dito | rot |
| 27 | Anilin-4-sulfonamid | 3– | dito | rot |
| 28 | Anilin-2-sulfonsäure | 4– | dito | rot |
| 29 | Anilin-4-sulfonsäure | 4– | dito | rot |
| 30 | Anilin-2,5-disulfonsäure | 4– | dito | rot |
| 31 | 2-Naphthylamin-1,5-disulfonsäure | 4– | dito | rot |
| 32 | Anilin-2-sulfonsäure | 4– | 1-Nitro-2-(3'-amino-phenylsulfonyl)-5-(β-sulfatoethyl-sulfonyl)-benzol | |
| 33 | 2-Naphthylamin-1,5-disulfonsäure | 4– | dito | rot |
| 34 | Anilin-2-sulfonsäure | 3– | dito | rot |
| 35 | 2-Naphthylamin-1,5-disulfonsäure | 3– | dito | rot |
| 36 | Anilin-2-sulfonsäure | 3– | 1-Nitro-4-(3'-amino-phenylamin)-5-(β-sulfatoethyl-sulfonyl)-benzol | rot |
| 37 | 2-Naphthylamin-1,5-disulfonsäure | 3– | dito | rot |
| 38 | Anilin-2-sulfonsäure | 3– | 1-Nitro-2-(4'-amino-phenylamino)-5-(β-phosphatoethyl-sulfonyl)-benzol | rot |
| 39 | dito | 3– | 1-Nitro-2-(4'-amino-phenylamino)-5-vinylsulfonyl-benzol | rot |
| 40 | dito | 3– | 1-Nitro-2-(4'-amino-phenylamino)-5-(β-thiosulfato-ethylsulfonyl)-benzol | rot |

Azoverbindung entsprechend der Formel (B) (Fortsetzung)

| Bsp. | Aromat. Amin D-$NH_2$ | Stellung der Sulfogruppe | Amino-diphenylamin H-$Z^3$ entsprechend der Formel (8) | Farbton |
|---|---|---|---|---|
| 41 | Anilin-2-sulfonsäure | 3– | 1-Nitro-2-(4'-amino-phenylamin)-5-(β-chlorethyl-sulfonyl)-benzol | rot |
| 42 | dito | 3– | 1-Nitro-4-(4'-amino-phenylamino)-5-(β-thiosulfato-ethylsulfonyl)-benzol | rot |
| 43 | dito | 3– | 1-Nitro-2-(3'-amino-phenylamino)-5-vinylsulfonyl-benzol | rot |
| 44 | dito | 3– | 1-Nitro-2-(3'-amino-phenyl-methylamino)-5-β-(sulfato-ethylsulfonyl)-benzol | rot |
| 45 | dito | 3– | 1-Nitro-2-(3'-aminophenyl-methylamino)-5-(β-thiosulfato-ethylsulfonyl)-benzol | rot |
| 46 | dito | 3– | 1-Nitro-4-(4'-aminophenyl-methylamino)-5-(β-sulfatoethyl-sulfonyl)-benzol | rot |
| 47 | Anilin-2,5-disulfonsäure | 3– | 1-Nitro-2-(4'-aminophenyl-methylamino)-5-(β-thiosulfato-ethylsulfonyl)-benzol | rot |
| 48 | Anilin-2-sulfonsäure | 3– | 1-Nitro-2-(4'-amino-3'-sulfo-phenylamino)-5-(β-sulfato-ethylsulfonyl)-benzol | rot |
| 49 | 2-Naphthylamin-1,5-disulfonsäure | 3– | dito | rot |
| 50 | Anilin-2-sulfonsäure | 3– | 1-Nitro-2-(4'-amino-2'-sulfo-phenylamino)-5-(β-sulfato-ethylsulfonyl)-benzol | rot |
| 51 | 2-Naphthylamin-1,5-disulfonsäure | 3– | dito | rot |
| 52 | 2-Naphthylamin-4,8-disulfonsäure | 3– | dito | rot |

*Beispiel 53*

a) Eine Lösung von 43,7 Teilen einer auf üblichem Wege durch Kupplung von 3-Amino-6-sulfo-naphthol mit diazotiertem 2-Sulfo-4-methoxy-anilin hergestellten Aminoazoverbindung in 1000 Teilen Wasser wird bei einer Temperatur zwischen 0 und 5 °C langsam unter Rühren mit einer Lösung aus 18 Teilen Cyanurchlorid in 200 Volumenteilen Aceton versetzt; während der Reaktion wird der pH-Wert zwischen 5 und 6 mittels verdünnter wässriger Natronlauge oder verdünnter wässriger Natriumcarbonatlösung gehalten.

b) Zu der unter a) hergestellten Dichlortriazinylamino-azonaphthol-Verbindung werden 41 Teile 1-Nitro-2-(4'-aminophenylamino)-5-(β-sulfatoethyl-sulfonyl)-benzol unter Einhaltung eines pH-Wertes zwischen 5 und 6 unter allmählicher Erhöhung der Reaktionstemperatur auf 25 °C gegeben. Der Ansatz wird unter diesen Bedingungen noch etwa 6 Stunden weitergerührt und die erfindungsgemässe Verbindung anschliessend in üblicher Weise isoliert.

Es wird ein elektrolythaltiges rotes Pulver des Natriumsalzes der Verbindung der Formel

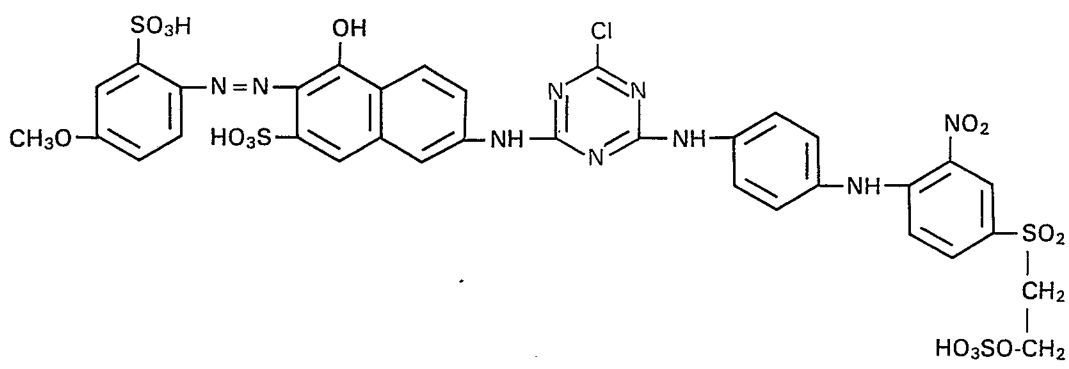

erhalten, die sehr gute faserreaktive Farbstoffeigenschaften zeigt, in wässriger Lösung ein Absorptionsmaximum von 500 nm besitzt und nach den in der Technik üblichen Applikations- und Fixiermethoden auf den in der Beschreibung genannten Materialien, insbesondere auf Cellulosefasermaterialien, wie Baumwolle, echte, farbstarke rote Färbungen und Drucke liefert. Von den guten Echtheitseigenschaften sind insbesondere die guten Nassechtheiten, wie guten Wasch-, Nasslicht- und alkalische Schweisslichtechtheiten, hervorzuheben.

*Beispiel 54*

a) Man trägt 41 Teile 1-Nitro-2-(4'aminophenylamino)-5-(β-sulfatoethylsulfonyl)-benzol in eine Suspension aus 18 Teilen Cyanurchlorid, 100 Teilen Eis und 300 Teilen Wasser ein und hält während der Reaktion den pH-Wert bei 5,0 durch Zugabe einer wässrigen Natriumcarbonatlösung. Die Reaktionstemperatur wird durch Aussenkühlung bei 5 bis 8°C gehalten. Es wird noch etwa 6 Stunden nachgerührt.

b) Zu der unter a) hergestellten Lösung der Dichlortriazin-Verbindung wird eine Suspension von 55 Teilen eines Aminoazofarbtoffes (aus 3-Amino-8-naphthol-6-sulfonsäure als Kupplungskomponente und 1,5-Disulfo-2-naphthylamin als Diazokomponente) in 200 Teilen Wasser eingerührt; die Reaktionstemperatur wird auf 30 bis 40°C erhöht und der pH-Wert durch Zugabe einer wässrigen Natriumcarbonatlösung bei 5 bis 6 gehalten. Nach Beendigung der Kondensationsreaktion wird die erfindungsgemässe Verbindung in üblicher Weise isoliert.

Man erhält ein dunkeloranges, elektrolythaltiges Pulver des Alkalisalzes der Verbindung der Formel

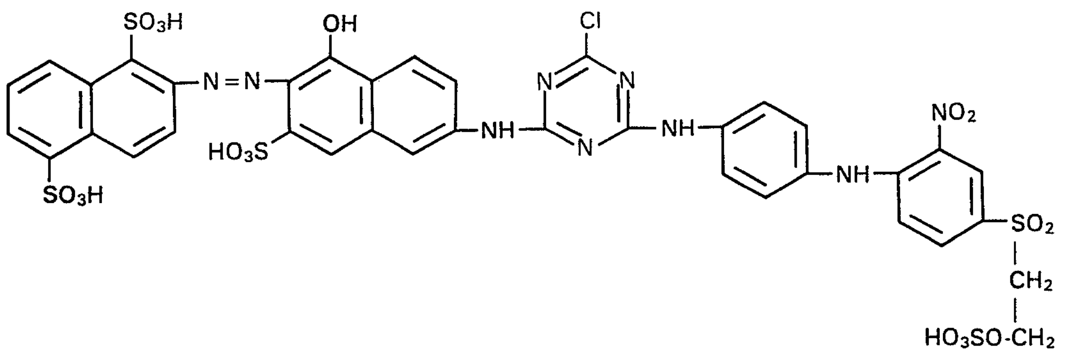

die sehr gute faserreaktive Farbstoffeigenschaften besitzt, in wässriger Lösung ein Absorptionsmaximum bei 487 nm zeigt und beispielsweise Cellulosefasermaterialien, wie Baumwolle, nach den in der Technik üblichen Applikations- und Fixiermethoden in echten, farbstarken orangen Tönen färbt; von den Echtheitseigenschaften der erhältlichen Färbungen sind insbesondere die gute Waschechtheit und die guten Nasslichtechtheiten und die gute alkalische Schweissechtheit hervorzuheben.

*Beispiele 55 bis 73*

In den nachfolgenden Tabellenbeispielen sind weitere erfindungsgemässe Azoverbindungen entsprechend einer allgemeinen Formel (C)

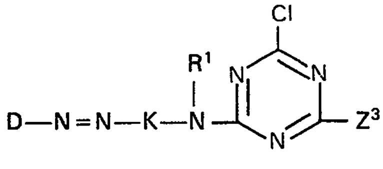

(C)

beschrieben, in welcher D dem Rest des aromatischen Amins $D-NH_2$ der Diazokomponente, $-K-N(R^1)-$ dem Rest der Kupplungskomponente und $Z^3$ dem Amino-Rest des Amino-nitrodiphenylamins der in der Beschreibung genannten allgemeinen Formel (8) entspricht. Sie lassen sich in erfindungsgemässer Weise, beispielsweise analog einem der obigen Ausführungsbeispiels, aus den aus der Formel ersichtlichen Komponenten [wie der Diazoniumverbindung des aromatischen Amins, der Aminonaphtholsulfonsäure, Cyanurchlorid und der Amino-nitrodiphenylamin-Verbindung $H-Z^3$ entsprechend der allgemeinen Formel (8)] herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit guten Echtheiten, wie beispielsweise den im Beispiel 1 angegebenen Echtheiten, in dem in dem jeweiligen Tabellenbeispiel angegebenen Farbton auf Baumwolle.

Azoverbindung entsprechend Formel (C)

| Bsp. | Aromat. Amin $D-NH_2$ | Kupplungskomp. $H-K-NHR^1$ | Aminodiphenylamin $H-Z^3$ | Farbton |
|---|---|---|---|---|
| 55 | 2-Naphthylamin-1,5,7-trisulfonsäure | 2-Amino-5-naphthol-7-sulfonsäure | 1-Nitro-2-(4'-aminophenyl-amino)-5-(β-sulfatoethyl-sulfonyl)-benzol | orange |
| 56 | 2-Naphthylamin-4,6,8-trisulfonsäure | dito | dito | orange |
| 57 | 2-Naphthylamin-3,6,8-trisulfonsäure | dito | dito | orange |
| 58 | 2-Naphthylamin-6,8-disulfonsäure | dito | dito | orange |
| 59 | Anilin-2-sulfonsäure | dito | dito | orange |
| 60 | 4-Methoxy-anilin-2,5-disulfonsäure | dito | dito | orange |
| 61 | 2-Naphthylamin-1,5-disulfonsäure | dito | 1-Nitro-2-(3'-aminophenyl-amino)-5-(β-sulfatoethyl-sulfonyl)-benzol | orange |
| 62 | dito | dito | 1-Nitro-4-(3'-aminophenyl-amino)-5-(β-sulfatoethyl-sulfonyl)-benzol | orange |
| 63 | 4-Methoxy-anilin-2-sulfonsäure | dito | 1-Nitro-4-(4'-aminophenyl-amino)-5-(β-sulfatoethyl-sulfonyl)-benzol | orange |
| 64 | 2-Naphthylamin-1,5,7-trisulfonsäure | dito | dito | orange |
| 65 | 2-Naphthylamin-4,6,8-trisulfonsäure | 2-Amino-5-naphthol-7-sulfonsäure | 1-Nitro-4-(4'-aminophenyl-amino)-5-(β-sulfatoethyl-sulfonyl)-benzol | orange |
| 66 | 4-Methoxy-anilin-2-sulfonsäure | 2-Amino-5-naphthol-1,7-disulfonsäure | dito | orange |
| 67 | 2-Naphthylamin-3,6-8-trisulfonsäure | 2-Methylamino-5-naphthol-7-sulfonsäure | 1-Nitro-2-(4'-aminophenyl-amino)-5-(β-sulfatoethyl-sulfonyl)-benzol | oranghe |
| 68 | dito | 3-Amino-5-naphthol-7-sulfonsäure | dito | orange |
| 69 | 2-Naphthylamin-1,5,7-trisulfonsäure | dito | dito | orange |
| 70 | 2-Naphthylamin-1,5-disulfonsäure | 3-Methylamino-5-naphthol-7-sulfonsäure | dito | orange |
| 71 | Anilin-1,4-disulfon-säure | 3-Ureido-anilin | 1-Nitro-2-(4'-aminophenyl-amino)-5-(β-sulfato-ethylsulfonyl)-benzol | goldgelb |
| 72 | 2-Naphthylamin-6,8-disulfonsäure | dito | dito | goldgelb |
| 73 | 2-Naphthylamin-3,6,8-trisulfonsäure | 3-Acetylamino-6-sulfo-anilin | dito | goldgelb |

*Beispiel 74*

In eine in üblicher Weise hergestellte Diazoniumsalzlösung aus 45,7 Teilen einer Aminoazoverbindung mit 1-Naphthylamin 2,5,7-trisulfonsäure als Diazokomponente und 1-Naphthylamin als Kupplungskomponente in 1500 Teilen Wasser werden als Kupplungskomponente 22 Teile 1-Naphthylamin-6-sulfonsäure eingetragen; mit einer verdünnten wässrigen Natriumcarbonatlösung stellt man den pH allmählich auf einen Wert von 4 ein, rührt noch 8 Stunden bei 8 bis 10°C weiter und versetzt sodann die so erhaltene Lösung der Amino-Disazoverbindung langsam mit einer Lösung von 18 Teilen Cyanurchlorid in 200 Volumenteilen Aceton unter Einhaltung des pH-Wertes zwischen 4 und 5 mittels einer wässrigen Natriumcarbonatlösung.

Nach beendeter Kondensationsreaktion werden in diese Lösung der Dichlortriazinylamino-Disazoverbindung 42 Teile 1-Nitro-2-(4'-aminophenylamino)-5-(β-sulfatoethylsulfonyl)-benzol eingetragen, die Reaktionstemperatur langsam auf 40 bis 60°C erhöht und der pH-Wert zwischen 6 und 6,5 mittels einer wässrigen verdünnten Natriumcarbonatlösung erhalten.

Die gebildete erfindungsgemässe Disazoverbindung wird in üblicher Weise isoliert, beispielsweise durch Aussalzen mit Natriumchlorid. Man erhält das Natriumsalz der Verbindung der Formel

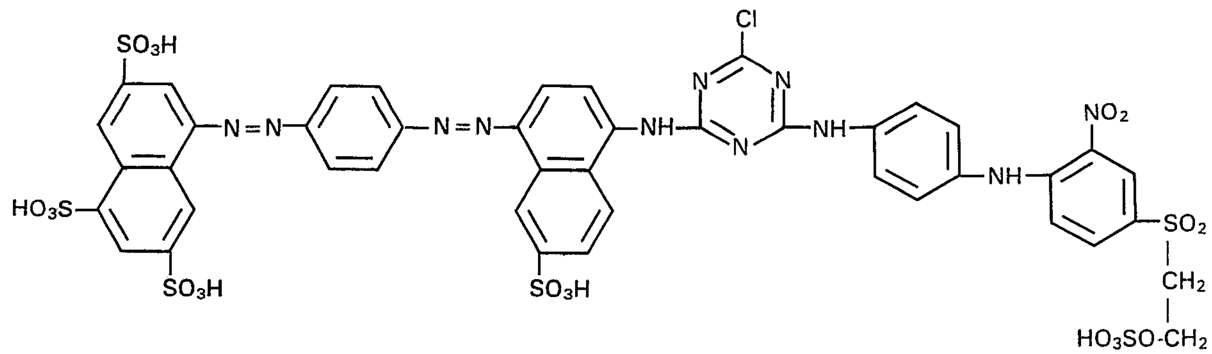

die sehr gute faserreaktive Farbstoffeigenschaften besitzt, in wässriger Lösung ein Absorptionsmaximum bei 465 nm zeigt und insbesondere Cellulosefasermaterialien, wie Baumwolle, in farbstarken, echten Tönen färbt.

*Beispiel 75*

Eine in üblicher Weise hergestellte wässrige Diazoniumsalzlösung einer Aminoazoverbindung aus 38,5 Teilen einer Aminoazoverbindung aus 2,5-Disulfoanilin als Diazokomponente und 1-Naphthylamin-6-sulfonsäure als Kupplungskomponente in 1500 Teilen Wasser werden mit 22 Teilen 1-Naphthylamin-8-sulfonsäure als Kupplungskomponente versetzt.

Mit Hilfe einer wässrigen Natriumcarbonatlösung wird der pH langsam auf einen Wert von 4 gestellt und die Kupplung bei diesem pH-Wert zu Ende geführt. Die gebildete Amino-Disazoverbindung wird sodann zu einer analog den Angaben des Beispieles 69a) hergestellten Suspension des primären Kondensationsproduktes aus Cyanurchlorid und 1-Nitro-2-(4'-aminophenylamino)-5-(β-sulfatoethylsulfonyl)-benzol gegeben und die sekundäre Kondensationsreaktion wird bei einer Temperatur zwischen 45 und 50°C und einem pH-Wert zwischen 6 und 6,5 durchgeführt. Nach beendeter Kondensationsreaktion wird die erfindungsgemässe Disazoverbindung in üblicher Weise als Natriumsalz isoliert. Sie besitzt, in Form der freien Säure geschrieben, die Formel

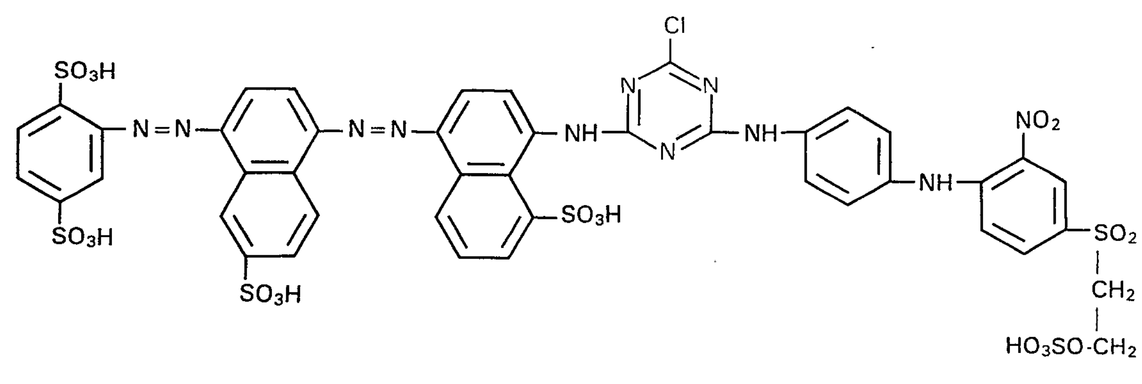

weist sehr gute faserreaktive Farbstoffeigenschaften auf, zeigt in wässriger Lösung ein Absorptionsmaximum bei 506 nm und färbt insbesondere Cellulosefasermaterialien, wie Baumwolle, nach den in der Technik für faserreaktive Farbstoffe üblichen Applikations- und Fixiermethoden in echten braunen, kräftigen Nuancen.

*Beispiele 76 bis 96*

In den nachfolgenden Tabellenbeispielen sind weitere erfindungsgemässe Azoverbindungen entsprechend einer allgemeinen Formel (D)

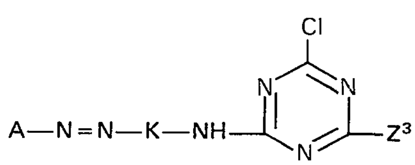 (D)

beschrieben, in welcher A dem Rest der aromatischen diazotierbaren, als Diazokomponente wirkenden Amino-Azoverbindung, -K-NH- dem Rest einer Kupplungskomponente entsprechend dem in der Beschreibung erwähnten Formelrest K und $Z^3$ dem Amino-Rest des Amino-nitro-diphenylamins der in der Beschreibung genannten allgemeinen Formel (8) entspricht. Sie lassen sich in erfindungsgemässer Weise, beispielsweise analog einem der obigen Ausführungsbeispiele, aus den aus der Formel ersichtlichen Komponenten [wie der Diazoniumverbindung der aromatischen Amino-Azoverbindung, der Aminonaphtholsulfonsäure, Cyanurchlorid und der Amino-nitro-diphenylamin-Verbindung H-$Z^3$ gemäss der in der Beschreibung genannten allgemeinen Formel (8)] herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit guten Echtheiten, wie beispielsweise den in Beispiel 1 angegebenen Echtheiten, in dem in dem jeweiligen Tabellenbeispiel angegebenen Farbton auf Baumwolle.

Azoverbindung entsprechend der Formel (D)

| Bsp. | Amino-Disazoverbindung A-$NH_2$ | Kupplungskomponente H-K-$NH_2$ | Amino-diphenylamin H-$Z^3$ | Farbton |
|---|---|---|---|---|
| 76 | 4-(2',5',7'-Trisulfo-naphthyl-1'-azo)-1-aminonaphthalin | 1-Naphthylamin-8-sulfonsäure | 1-Nitro-2-(4'-aminophenyl-amino)-5-(β-sulfatoethyl-sulfonyl)-benzol | braun |
| 77 | dito | 3-Methyl-anilin | dito | braun |
| 78 | dito | 1-Naphthylamin-8-sulfonsäure | 1-Nitro-4-(4'-aminophenyl-amino)-5-(β-sulfatoethyl-sulfonyl)-benzol | braun |
| 79 | 4-(2',4'-Disulfophenyl-azo)-2-sulfoanilin | 1-Naphthylamin-6-sulfonsäure | 1-Nitro-2-(4'-aminophenyl-amino)-5-(β-sulfatoethyl-sulfonyl)-benzol | gelbbraun |
| 80 | dito | dito | 1-Nitro-2-(4'-aminophenyl-amino)-5-(β-phosphatoethyl-sulfonyl)-benzol | gelbbraun |
| 81 | dito | 1-Naphthylamin-8-sulfonsäure | 1-Nitro-2-(4'-aminophenyl-amino)-5-vinylsulfonyl-benzol | gelbbraun |
| 82 | dito | dito | 1-Nitro-4-(4'-aminophenyl-amino)-5-(β-sulfatoethyl-sulfonyl)-benzol | gelbbraun |
| 83 | 4-(4',8'-Disulfo-naphthyl-2'-azo)-6-sulfo-1-naphthylamin | 1-Naphthylamin-8-sulfonsäure | dito | rotbraun |
| 84 | dito | dito | 1-Nitro-2-(4'-aminophenyl-amino)-5-(β-sulfatoethyl-sulfonyl)-benzol | rotbraun |
| 85 | 4-(4',8'-Disulfo-naphthyl-2'-azo)-6-sulfo-1-naphthyl-amin | 1-Naphthylamin-6-sulfonsäure | 1-Nitro-2-(4'-aminophenyl-amino)-5-(β-sulfatoethyl-sulfonyl)-benzol | rotbraun |
| 86 | 4-(4',6',8'-Trisulfo-naphthyl-2'-azo)-6-sulfo-1-naphthylamin | 3-Methyl-anilin | dito | braun |
| 87 | dito | 1-Naphthylamin-8-sulfonsäure | dito | rotbraun |
| 88 | dito | 1-Naphthylamin-6-sulfonsäure | dito | rotbraun |
| 89 | dito | dito | 1-Nitro-4-(4'-aminophenyl-amino)-5-(β-sulfatoethyl-sulfonyl)-benzol | rotbraun |
| 90 | dito | 1-Naphthylamin-8-sulfonsäure | dito | rotbraun |
| 91 | dito | 3-Methyl-anilin | dito | braun |

Azoverbindung entsprechend der Formel (D) (Fortsetzung)

| Bsp. | Amino-Disazoverbindung A-$NH_2$ | Kupplungskomponente H-K-$NH_2$ | Amino-diphenylamin H-$Z^3$ | Farbton |
|---|---|---|---|---|
| 92 | 4-(4',6',8'-Trisulfo-naphthyl-2'-azo)-6-sulfo-1-naphthylamin | 1-Naphthylamin-8-sulfonsäure | 1-Nitro-2-(3'-aminophenyl-amino)-5-(β-sulfatoethyl-sulfonyl)-benzol | rotbraun |
| 93 | dito | dito | 1-Nitro-4-(3'-aminophenyl-amino)-5-(β-sulfatoethyl-sulfonyl)-benzol | rotbraun |
| 94 | 4-(2',5',7'-Trisulfo-naphthyl-1'-azo)-1-naphthylamin | dito | 1-Nitro-2-(3'-aminophenyl-amino)-5-(β-sulfatoethyl-sulfonyl)-benzol | rotbraun |
| 95 | 4-(2',5',7'-Trisulfo-naphthyl-1'-azo)-6-sulfo-1-naphthylamin | 1-Naphthylamin-8-sulfonsäure | 1-Nitro-2-(4'-aminophenyl-amino)-5-(β-sulfatoethyl-sulfonyl)-benzol | rotbraun |
| 96 | dito | 1-Naphthylamin-6-sulfonsäure | dito | rotbraun |

**Patentansprüche**

1. Eine wasserlösliche Aztoverbindung entsprechend der allgemeinen Formel (1)

$$A - N = N - K - Z \quad (1)$$

in welcher bedeuten:

A ist der Phenylrest, der durch Substituenten substituiert sein kann, die der Gruppe der Substituenten Alkyl von 1 bis 4 C-Atomen, Alkoxy von 1 bis 4 C-Atomen, Carboxy, gegebenenfalls durch Chlor, Brom, Sulfo, Sulfato, Carboxy und/oder Hydroxy substituiertes Alkanoylamino von 2 bis 5 C-Atomen, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenyl-sulfamoyl, N-Phenyl-N-($C_1$-$C_4$-alkyl)-sulfamoyl, Cyan, Nitro, Chlor, Brom, Fluor, Trifluormethyl, Hydroxy und Sulfo angehören, oder

A ist ein Naphthylrest, der durch Substituenten substituiert sein kann, die der Gruppe der Substituenten Sulfo, Carboxy, Methyl, Ethyl, Methoxy, Ethoxy, gegebenenfalls durch Chlor, Brom, Sulfo, Sulfato, Carboxy und/oder Hydroxy substituiertes Alkanoylamino von 2 bis 5 C-Atomen, Benzoylamino, Sulfobenzoylamino, Chlor, Hydroxy und Nitro angehören, oder

A ist ein Rest der allgemeinen Formel (2)

$$D - N = N - E - \quad (2)$$

in welcher

D der Phenylrest ist, der durch Substituenten substituiert sein kann, die der Gruppe der Substituenten Alkyl von 1 bis 4 C-Atomen, Alkoxy von 1 bis 4 C-Atomen, Carboxy, gegebenenfalls durch Chlor, Brom, Sulfo, Sulfato, Carboxy und/oder Hydroxy substituiertes Alkanoylamino von 2 bis 5 C-Atomen, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenyl-sulfamoyl, N-Phenyl-N-($C_1$-$C_4$-alkyl)-sulfamoyl, Cyan, Nitro, Chlor, Brom, Fluor, Trifluormethyl, Hydroxy und Sulfo angehören,
oder D ein Naphthylrest ist, der durch Substituenten substituiert sein kann, die der Gruppe der Substituenten Sulfo, Carboxy, Methyl, Ethyl, Methoxy, Ethoxy, gegebenenfalls durch Chlor, Brom, Sulfo, Sulfato, Carboxy und/oder Hydroxy substituiertes Alkanoylamino von 2 bis 5 C-Atomen, Benzoylamino, Sulfobenzoylamino, Chlor, Hydroxy und Nitro angehören, und

E der Rest einer kupplungsfähigen und diazotierbaren Verbindung ist, die beim Aufbau der Verbindungen (1) zunächst als Kupplungskomponente, dann als Diazokomponente dient, und
einen Phenylenrest darstellt, der durch einen oder zwei Substituenten substituiert sein kann, die aus der Menge von 2 Alkyl von 1 bis 4 C-Atomen, 2 Alkoxy von 1 bis 4 C-Atomen, 2 Chlor, 1 Brom, 1 gegebenenfalls durch Chlor, Brom, Sulfo, Sulfato, Carboxy und/oder Hydroxy substituiertes Alkanoylamino von 2 bis 5 C-Atomen, 1 Benzoylamino, 2 Sulfo, 1 Carboxy, 1 N,N-Dialkylamino mit Alkylgruppen von jeweils 1 bis 4 C-Atomen, 1 Ureido, 1 Phenylureido und 1 Alkylsulfonylamino von 1 bis 4 C-Atomen ausgewählt sind,
oder einen Naphthylenrest bedeutet, der durch 1 oder 2 Sulfogruppen oder durch eine Alkylgruppe von 1 bis 4 C-Atomen, eine Nitrogruppe, eine Alkanoylaminogruppe von 2 bis 5 C-Atomen oder eine Benzoylaminogruppe oder durch 1 oder 2 Sulfogruppen und durch eine Alkylgruppe von 1 bis 4 C-Atomen, eine Nitrogruppe, Alkanoylaminogruppe von 2 bis 5 C-Atomen oder Benzoylaminogruppe substituiert sein kann,

oder einen Naphthylenrest darstellt, der in ortho-Stellung zur Azogruppe des Restes der Formel (2) eine Aminogruppe, eine Alkylaminogruppe von 1 bis 4 C-Atomen oder eine gegebenenfalls durch Chlor, Alkyl von 1 bis 4 C-Atomen, Alkoxy von 1 bis 4 C-Atomen, Sulfo und/oder Carboxy substituierte Phenylaminogruppe oder eine Hydroxygruppe gebunden enthält und der zusätzlich durch eine oder zwei Sulfogruppen oder eine Alkylgruppe von 1 bis 4 C-Atomen, eine Nitrogruppe, eine Alkanoylaminogruppe von 2 bis 5 C-Atomen oder eine Benzoylamino- oder Sulfobenzoylaminogruppe oder durch eine oder zwei Sulfogruppen und eine Alkylgruppe von 1 bis 4 C-Atomen, Nitrogruppe, Alkanoylaminogruppe von 2 bis 5 C-Atomen oder eine Benzoylamino- oder Sulfobenzoylaminogruppe substituiert sein kann;

K ist ein 1-Hydroxy-naphthylen-Rest, der in 2-Stellung die Azogruppe gebunden enthält, oder ist ein 2-Hydroxy-naphthylen-Rest, der in 1-Stellung die Azogruppe gebunden enthält, die beide durch 1 oder 2 Sulfogruppen oder durch eine gegebenenfalls durch Chlor, Brom, Sulfo, Sulfato, Carboxy und/oder Hydroxy substituierte Alkanoylaminogruppe von 2 bis 5 C-Atomen oder eine Benzoylaminogruppe substituiert sein können oder durch eine gegebenenfalls durch Chlor, Brom, Sulfo, Sulfato, Carboxy und/oder Hydroxy substituierte Alkanoylaminogruppe von 2 bis 5 C-Atomen oder eine Benzoylaminogruppe und eine oder zwei Sulfogruppen substituiert sein können, oder

K ist ein Naphthylenrest, der durch 1 oder 2 Sulfogruppen substituiert sein kann oder durch 1 oder 2 Sulfogruppen und eine gegebenenfalls mono- oder disubstituierte Aminogruppe substituiert sein kann, wobei die Substituenten der Aminogruppen der Gruppe der Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit Alkylresten von jeweils 1 bis 4 C-Atomen, Phenylalkyl mit einem Alkylrest von 1 bia 4 C-Atomen, wobei der Phenylrest durch Methyl, Ethyl, Methoxy, Ethoxy, Chlor, Sulfo und/oder Carboxy substituiert sein kann, Phenyl und durch Alkyl von 1 bis 4 C-Atomen, Alkoxy von 1 bis 4 C-Atomen, Chlor, Carboxy und/oder Sulfo substituiertes Phenyl angehören, oder

K ist ein 1-Amino-naphthylen-Rest, der in 2-Stellung die Azogruppe gebunden enthält, oder ist ein 2-Amino-naphthylen-Rest, der in 1-Stellung die Azogruppe gebunden enthält, wobei beide Aminonaphthylenreste durch 1 oder 2 Sulfogruppen oder durch eine Hydroxygruppe in 5-, 6-, 7- oder 8-Stellung oder durch diese Hydroxygruppe und 1 oder 2 Sulfogruppen substituiert sein können, oder

K ist ein Phenylenrest, der durch 1 oder 2 Substituenten substituiert sein kann, die aus der nachfolgenden Menge von Substituenten ausgewählt sind: 2 Alkyl von 1 bis 4 C-Atomen, 2 Alkoxy von 1 bis 4 C-Atomen, 2-Chlor, 1 Brom, 1 gegebenenfalls durch Chlor, Brom, Sulfo, Sulfato, Carboxy und/oder Hydroxy substituiertes Alkanoylamino von 2 bis 5 C-Atomen, 1 Benzoylamino, 1 Sulfo, 1 Carboxy, 1 Ureido, 1 Phenylureido, 1 Alkylsulfonylamino von 1 bis 4 C-Atomen, 1 Amino und 1 mono- oder disubstituiertes Amino, dessen Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit Alkyresten von jeweils 1 bis 4 C-Atomen, Phenylalkyl mit einem Alkylrest von 1 bis 4 C-Atomen, wobei dessen Phenylrest durch Methyl, Ethyl, Methoxy, Ethoxy, Chlor, Carboxy und/oder Sulfo substituiert sein kann, Phenyl und durch Alkyl von 1 bis 4 C-Atomen, Alkoxy von 1 bis 4 C-Atomen, Chlor, Carboxy und/oder Sulfo substituiertes Phenyl sind;

Z ist ein Rest der allgemeinen Formel (3)

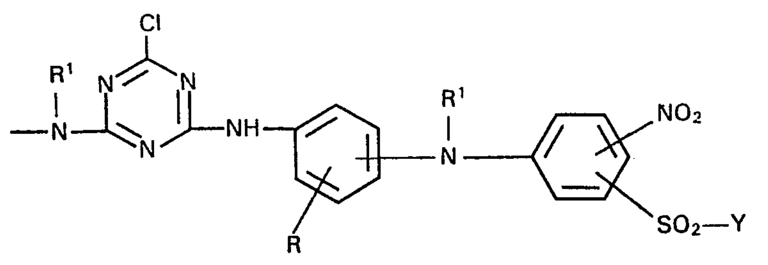

(3)

in welcher

$R^1$ für ein Wasserstoffatom oder eine gegebenenfalls durch einen oder zwei Substituenten aus der Gruppe Acetylamino, Hydroxy, Sulfato, Alkoxy von 1 bis 4 C-Atomen, Sulfo und Carboxy substituierte Alkylgruppe von 1 bis 4 C-Atomen steht, wobei beide $R^1$ zueinander gleiche oder voneinander verschiedene Bedeutungen besitzen können,

R ein Wasserstoffatom oder eine Sulfogruppe bedeutet und

Y die Vinylgruppe oder eine β-Thiosulfatoethyl-, β-Phosphatoethyl-, β-Chlorethyl- oder β-Sulfato ethyl-Gruppe ist.

2. Verbindung nach Anspruch 1 der allgemeinen Formel (1), in welcher K und Z die in Anspruch 1 genannten Bedeutungen haben und

A der Phenylrest ist, der durch 1 oder 2 Substituenten substituiert sein kann, die der Gruppe der Substituenten Alkyl von 1 bis 4 C-Atomen, Alkoxy von 1 bis 4 C-Atomen, Carboxy, Alkanoylamino von 2 bis 5 C-Atomen, Benzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenylsulfamoyl, N-Phenyl-N-($C_1$-$C_4$-alkyl)-sulfamoyl, Cyan, Nitro,

Chlor, Brom, Fluor, Trifluormethyl, Hydroxy und Sulfo angehören, oder

A ein Naphthylrest ist, der durch 1, 2 oder 3 Substituenten substituiert sein kann, die der Gruppe der Substituenten Sulfo, Carboxy, Methyl, Ethyl, Methoxy, Ethoxy, Alkanoylamino von 2 bis 5 C-Atomen, Benzoylamino, Chlor, Hydroxy und Nitro angehören.

3. Verbindung nach Anspruch 1, dadurch gekennzeichnet, dass A der Phenylrest ist, der durch 1 oder 2 Substituenten aus der Gruppe Alkyl von 1 bis 4 C-Atomen, Alkoxy von 1 bis 4 C-Atomen, Chlor, Carboxy und Sulfo substituiert ist, wobei mindestens einer dieser Substituenten eine Sulfogruppe ist, oder ein Naphthylrest ist, der durch 1, 2 oder 3 Sulfogruppen substituiert ist.

4. Verbindung nach Anspruch 1, dadurch gekennzeichnet, dass A ein Rest der allgemeinen Formel (2)

$$D - N = N - E - \qquad (2)$$

ist, in welcher D den Phenylrest bedeutet, der durch 1 oder 2 Substituenten aus der Gruppe Alkyl von 1 bis 4 C-Atomen, Alkoxy von 1 bis 4 C-Atomen, Chlor, Carboxy und Sulfo substituiert ist, wobei mindestens einer dieser Substituienten eine Sulfogruppe ist, oder ein Naphthylrest ist, der durch 1, 2 oder 3 Sulfogruppen substituiert ist, und E einen 1-Hydroxy-naphthylen-Rest bedeutet, der den Azorest D-N=N- in 2-Stellung gebunden enthält und durch 1 oder 2 Sulfogruppen substituiert ist, oder der 1,4-Phenylenrest ist, der durch eine Aminogruppe, eine Alkylaminogruppe von 1 bis 4 C-Atomen, Alkanoylaminogruppe von 2 bis 5 C-Atomen, eine Methyl-, Ethyl-, Carboxy-, Sulfo- oder Ureidogruppe oder ein Chloratom oder durch eine dieser Substituenten und durch eine Methyl-, Ethyl-, Methoxy-, Ethoxy- oder Sulfogruppe oder ein Chloratom substituiert sein kann, oder ein 1,4-Naphthylenrest ist, der durch eine Alkanoylaminogruppe von 2 bis 5 C-Atomen oder eine Benzoylaminogruppe und/oder eine oder zwei Sulfogruppen substituiert sein kann.

5. Verbindung nach Anspruch 1, dadurch gekennzeichnet, dass A oder D ein Monosulfo- oder Disulfophenyl- oder ein Monosulfo-, Disulfo- oder Trisulfonaphthyl-Rest oder ein Benzolrest der allgemeinen Formel (4)

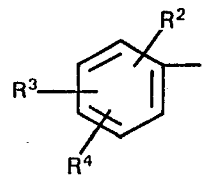

(4)

in welcher

$R^2$ ein Bromatom, eine Nitrogruppe oder eine Alkanoylaminogruppe von 2 bis 5 C-Atomen, ein Wasserstoffatom, eine Alkylgruppe von 1 bis 4 C-Atomen, eine Alkoxygruppe von 1 bis 4 C-Atomen, ein Chloratom oder eine Carboxygruppe bedeutet,

$R^3$ ein Bromatom oder eine Hydroxygruppe, ein Wasserstoffatom, eine Alkylgruppe von 1 bis 4 C-Atomen, eine Alkoxygruppe von 1 bis 4 C-Atomen, ein Chloratom oder eine Sulfogruppe ist und

$R^4$ ein Wasserstoffatom oder eine Sulfogruppe bedeutet.

6. Verbindung nach einem der Ansprüche 1 bis 5, dadurch gekennzeichnet, dass $R^1$ ein Wasserstoffatom oder eine Methylgruppe oder Ethylgruppe ist.

7. Verbindung nach Anspruch 1 entsprechend der allgemeinen Formel

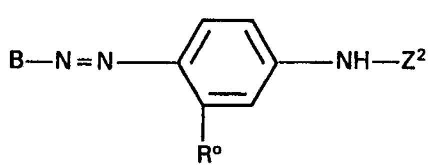

(12)

in welcher

B ein Monosulfophenyl-, ein Disulfophenyl-, ein Monosulfo-2-naphthyl-, ein Disulfo-2-naphthyl- oder ein Trisulfo-2-naphthyl-Rest oder ein Rest der in Anspruch 5 genannten und definierten allgemeinen Formel (4) ist,

$R^o$ ein Wassertstoffatom, ein Chlor- oder Bromatom, eine Aminogruppe, eine Alkanoylaminogruppe von 2 bis 5 C-Atomen, eine Sulfo-, Carboxy-, Methyl-, Ethyl-, Methoxy- oder Ureidogruppe bedeutet und

$Z^2$ ein Rest der allgemeinen Formel (3b)

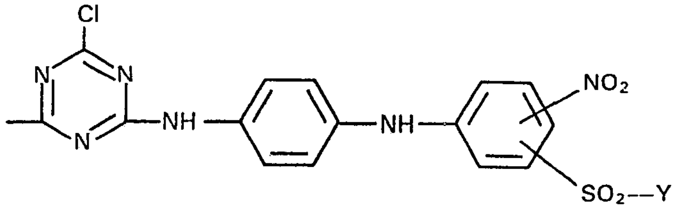

(3b)

ist, in welcher Y die in Anspruch 1 genannte Bedeutung besitzt und die Gruppe $-SO_2-Y$ und die Nitrogruppe zueinander meta-ständig an den Benzolkern gebunden sind, jedoch beide nicht gleichzeitig orthoständig zur Aminogruppe stehen.

8. Verbindung nach Anspruch 1, 2, 3 oder 4, dadurch gekennzeichnet, dass Z ein Rest der allgemeinen Formel

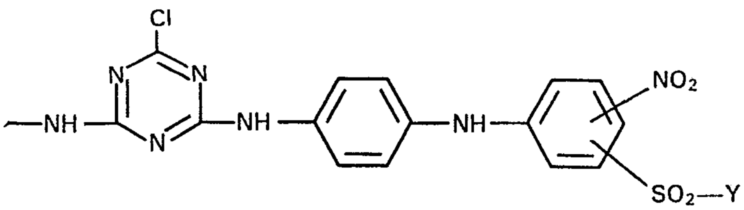

ist, in welcher Y die in Anspruch 1 genannte Bedeutung besitzt und die Gruppe $-SO_2-Y$ und die Nitrogruppe zueinander meta-ständig an den Benzolkern gebunden sind, jedoch beide nicht gleichzeitig ortho-ständig zur Aminogruppe stehen.

9. Verbindung nach Anspruch 1 der allgemeinen Formel

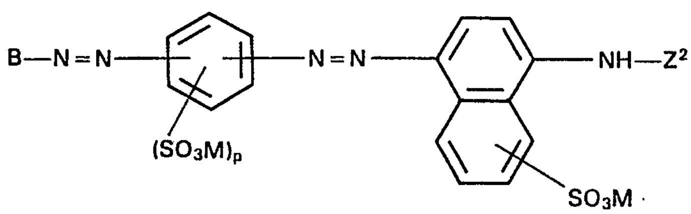

in welcher B und $Z^2$ die in Anspruch 7 genannten Bedeutungen haben, M ein Wasserstoffatom oder ein Alkalimetall ist und p für die Zahl Null, 1 oder 2 steht.

10. Verbindung nach Anspruch 1 der allgemeinen Formel

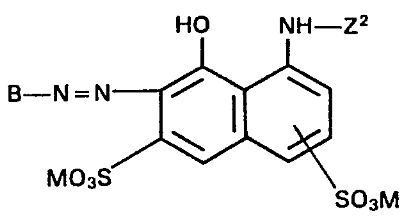

in welcher B und $Z^2$ die in Anspruch 7 genannten Bedeutungen haben und M für ein Wasserstoffatom oder ein Alkalimetall steht.

11. Verbindung nach Anspruch 1 der allgemeinen Formel

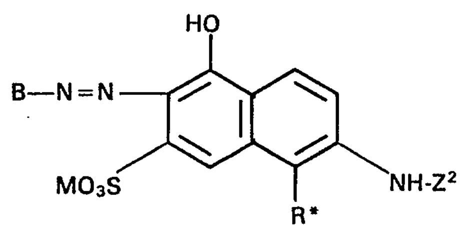

in welcher B und $Z^2$ die in Anspruch 7 genannten Bedeutungen haben, M für ein Wasserstoffatom oder ein Alkalimetall steht und R* ein Wasserstoffatom oder eine Sulfogruppe ist.

12. Verbindung nach Anspruch 1 der allgemeinen Formel

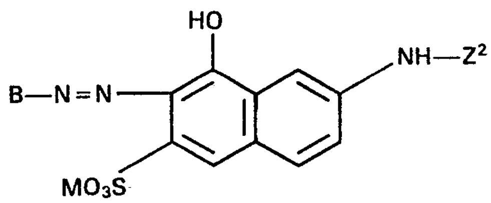

in welcher B und $Z^2$ die in Anspruch 7 genannten Bedeutungen haben und M für ein Wasserstoffatom oder ein Alkalimetall steht.

13. Verbindung nach Anspruch 1 der allgemeinen Formel

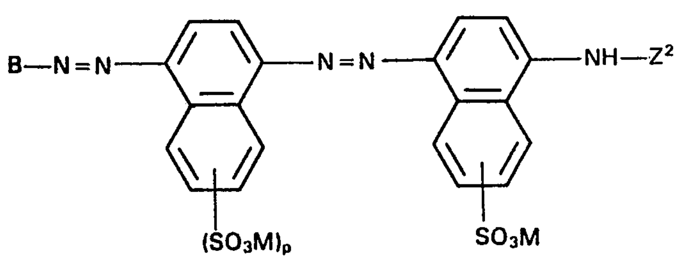

in welcher B und $Z^2$ die in Anspruch 7 genannten Bedeutungen haben, M für ein Wasserstoffatom oder ein Alkalimetall steht und p die Zahl Null, 1 oder 2 ist.

14. Verbindung nach einem der Ansprüche 1 bis 13 dadurch gekennzeichnez, dass Y für die Vinylgruppe oder die β-Sulfatoethyl-Gruppe steht.

15. Verfahren zur Herstellung der in Anspruch 1 genannten und definierten Verbindungen der allgemeinen Formel (1), dadurch gekennzeichnet, dass man eine Verbindung der allgemeinen Formel (5)

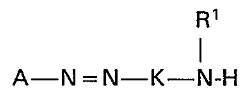

(5)

mit A, K und $R^1$ der in Anspruch 1 genannten Bedeutungen mit einer Dichlortriazin-Verbindung der allgemeinen Formel (6)

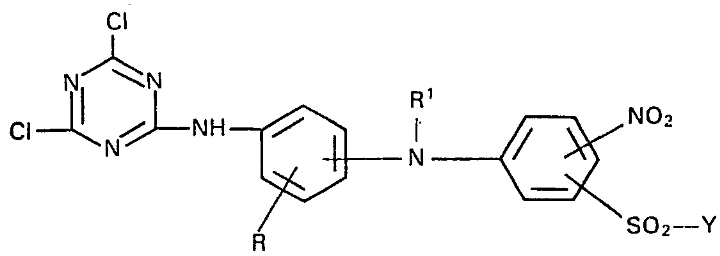

(6)

in welcher $R^1$, R und Y die in Anspruch 1 genannten Bedeutungen haben, unter Abspaltung eines Mols Chlorwasserstoff umsetzt, oder dass man eine Verbindung der allgemeinen Formel (7)

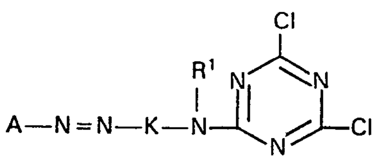

(7)

mit A, K und $R^1$ der in Anspruch 1 genannten Bedeutung mit einer Aminodiphenylamin-Verbindung der allgemeinen Formel (8)

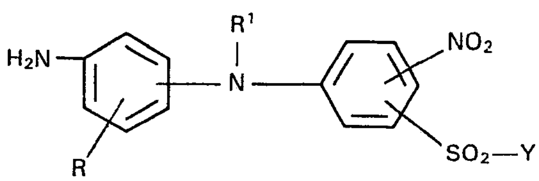

(8)

in welcher $R^1$, R und Y die in Anspruch 1 genannten Bedeutungen haben, unter Abspaltung eines Mols Chlorwasserstoff umsetzt, oder dass man eine Diazoniumverbindung eines Amins der allgemeinen Formel $A\text{-}NH_2$ mit A der in Anspruch 1 genannten Bedeutung mit einer kupplungsfähigen Verbindung der allgemeinen Formel H-K-Z mit K und Z der in Anspruch 1 genannten Bedeutung kuppelt.

16. Verwendung der in Anpruch 1 genannten und definierten Verbindungen der allgemeinen Formel (1) oder der nach Anspruch 15 hergestellten Verbindungen der allgemeinen Formel (1) als Farbstoffe.

17. Verwendung nach Anspruch 16 zum Färben (Colorieren) von hydroxy- und/oder carbonamidgruppenhaltigem Material, insbesondere Fasermaterial.

18. Verfahren zum Färben (Colorieren) von hydroxy- und/oder carbonamidgruppenhaltigem Material, vorzugsweise Fasermaterial, bei welchem man einen Farbstoff auf das Material aufbringt oder in das Material einbringt und ihn mittels Wärme und/oder in Gegenwart eines säurebindenden Mittels fixiert, dadurch gekennzeichnet, dass man als Farbstoff eine Verbindung der in Anspruch 1 genannten und definierten allgemeinen Formel (1) oder eine gemäss nach Anspruch 15 hergestellte Verbindung der allgemeinen Formel (1) einsetzt.

## Claims

1. A water-soluble azo compound conforming to the general formula (1)

$$A - N = N - K Z \qquad (1)$$

in which the symbols have the following meanings:

A is the phenyl radical which can be substituted by substituents belonging to the group of substituents consisting of alkyl of 1 to 4 carbon atoms, alkoxy of 1 to 4 carbon atoms, carboxyl, optionally chlorine-, bromine-, sulfo-, sulfato-, carboxyl- and/or hydroxyl-substituted alkanoylamino of 2 to 5 carbon atoms, benzoylamino, sulfobenzoylamino, phenylamino, sulfophenylamino, carbamoyl, carbamoyl monosubstituted or disubstituted by alkyl of 1 to 4 carbon atoms, sulfamoyl, sulfamoyl monosubstituted or disubstituted by alkyl of 1 to 4 carbon atoms, N-phenyl sulfamoyl, N-phenyl-N-($C_1$-$C_4$-alkyl)--sulfamoyl, cyano, nitro, chlorine, bromine, fluorine, trifluoromethyl, hydroxyl and sulfo, or

A is a naphthyl radical which can be substituted by substituents belonging to the group of substituents consisting of sulfo, carboxyl, methyl, ethyl, methoxy, ethoxy, optionally chlorine-, bromine-, sulfur-, sulfato-, carboxyl- and/or hydroxyl-substituted alkanoylamino of 2 to 5 carbon atoms, benzoylamino, sulfobenzoylamino, chlorine, hydroxyl and nitro, or

A is a radical of the general formula (2)

$$D — N = N — E — \quad (2)$$

in which

D is the phenyl radical which can be substituted by substituents belonging to the group of substituents consisting of alkyl of 1 to 4 carbon atoms, alkoxy of 1 to 4 carbon atoms, carboxyl, optionally chlorine-, bromine-, sulfo-, sulfato-, carboxyl-, and/or hydroxyl-substituted alkanoylamino of 2 to 5 carbon atoms, benzoylamino, sulfobenzoylamino, phenylamino, sulfophenylamino, carbamoyl, carbamoyl monosubstituted or disubstituted by alkyl of 1 to 4 carbon atoms, sulfamoyl, sulfamoyl monosubstituted or disubstituted by alkyl of 1 to 4 carbon atoms, N-phenyl sulfamoyl, N-phenyl-N--($C_1$-$C_4$-alkyl)-sulfamoyl, cyano, nitro, chlorine, bromine, fluorine, trifluoromethyl, hydroxyl and sulfo, or

D is a naphthyl radical which can be substituted by substituents belonging to the group of substituents consisting of sulfo, carboxyl, methyl, ethyl, methoxy, ethoxy, optionally chlorine-, bromine-, sulfo-, sulfato-, carboxyl- and/or hydroxyl-substituted alkanoylamino of 2 to 5 carbon atoms, benzoylamino, sulfobenzoylamino, chlorine, hydroxyl and nitro, and

E is the radical of a couplable and diazotizable compound which in the synthesis of compounds (1) serves first as a coupling component and then as a diazo component and represents a phenylene radical which can be substituted by one or two substituents which are selected from the set consisting of 2 alkyl of 1 to 4 carbon atoms, 2 alkoxy of 1 to 4 carbon atoms, 2 chlorine, 1 bromine, 1 alkanoylamino of 2 to 5 carbon atoms, optionally substituted by chlorine, bromine, sulfo, sulfato, carboxyl and/or hydroxyl, 1 benzoylamino, 2 sulfo, 1 carboxyl, 1 N,N-dialkylamino having alkyl groups of 1 to 4 carbon atoms each, 1 ureido, 1 phenylureido and 1 alkylsulfonylamino of 1 to 4 carbon atoms, or denotes a naphthylene radical which can be substituted by 1 or 2 sulfo groups or by an alkyl group of 1 to 4 carbon atoms, a nitro group, an alkanoylamino group of 2 to 5 carbon atoms or a benzoylamino group or by 1 or 2 sulfo groups and by an alkyl group of 1 to 4 carbon atoms, a nitro group, an alkanoylamino group of 2 to 5 carbon atoms or a benzoylamino group,
or represents a naphthylene radical which contains bonded in the ortho-position relative to the azo group of the radical of the formula (2) an amino group, an alkylamino group of 1 to 4 carbon atoms or a phenylamino group, otionally substituted by chlorine, alkyl of 1 to 4 carbon atoms, alkoxy of 1 to 4 carbon atoms, sulfo and/or carboxy, or a hydroxyl group and which can additionally be substituted by one or two sulfo groups or an alkyl group of 1 to 4 carbon atoms, a nitro group, an alkyanoylamino group of 2 to 5 carbon atoms or a benzoylamino or sulfobenzoylamino group or by one or two sulfo groups and an alkyl group of 1 to 4 carbon atoms, a nitro group, an alkanoylamino group of 2 to 5 carbon atoms or a benzoylamino or sulfobenzoylamino group;

K is a 1-hydroxynaphthylene radical which contains the azo group bonded in the 2-position or is a 2-hydroxynaphthylene radical which contains the azo group bonded in the 1-position, which can be both be substituted by 1 or 2 sulfo groups or by an alkanoylamino group of 2 to 5 carbon atoms, optionally substituted by chlorine, bromine, sulfo, sulfato, carboxyl and/or hydroxyl, or a benzoylamino group or by an alkanoylamino group of 2 to 5 carbon atoms, optionally substituted by chlorine, bromine, sulfo, sulfato, carboxyl and/or hydroxyl, or a benzoylamino group and one or two sulfo groups, or

K is a naphthylene radical which can be substituted by 1 or 2 sulfo groups or can be substituted by 1 or 2 sulfo groups and an optionally monosubstituted or disubstituted amino group, the substituents on the amino groups belonging to the groups of substituents consisting of alkyl of 1 to 4 carbon atoms, hydroxyalkyl of 1 to 4 carbon atoms, carboxyalkyl of 2 to 5 carbon atoms, sulfoalkyl of 1 to 4 carbon atoms, sulfatoalkyl of 1 to 4 carbon atoms, cyanoalkyl of 2 to 5 carbon atoms, carbalkoxyalkyl having alkyl radicals of 1 to 4 carbon atoms each, phenylalkyl having an alkyl radical of 1 to 4 carbon atoms, in which the phenyl radical can be substituted by methyl, ethyl, methoxy, ethoxy, chlorine, sulfo and/or carboxyl, phenyl and phenyl which is substituted by alkyl of 1 to 4 carbon atoms, alkoxy of 1 to 4 carbon atoms, chlorine, carboxyl and/or sulfo, or

K is a 1-aminonaphthylene radical which contains the azo group bonded in the 2-position or is a 2-aminonaphthylene radical which contains the azo group bonded in the 1-position, where both the aminonaphthylene radicals can be substituted by 1 or 2 sulfo groups or by a hydroxyl group in the 5-, 6-, 7- or 8-position or by this hydroxyl group and 1 or 2 sulfo groups, or

K is a phenylene radical which can be substituted by 1 or 2 substituents which are selected from the followings set of substituents: 2 alkyl of 1 to 4 carbon atoms, 2 alkoxy of 1 to 4 carbon atoms, 2 chlorine, 1 bromine, 1 alkanoylamino of 2 to 5 carbon atoms, optionally substituted by chlorine, bromine, sulfo, sulfato, carboxyl and/or hydroxyl, 1 benzoylamino, 1 sulfo, 1 carboxyl, 1 ureido, 1 phenylureido, 1 alkylsulfonylamino of 1 to 4 carbon atoms, 1 amino and 1 monosubstituted or disubstituted amino whose substituents are alkyl of 1 to 4 carbon atoms, hydroxyalkyl of 1 to 4 carbon atoms, carboxyalkyl of 2 to 5 carbon atoms, sulfoalkyl of 1 to 4 carbon atoms, sulfatoalkyl of 1 to 4 carbon atoms, cyanoalkyl of 2 to 5 carbon atoms, carbalkoxyalkyl having alkyl radicals of 1 to 4 carbon atoms each, phenylalkyl having an alkyl radical of 1 to 4 carbon atoms, whose phenyl radical can be substituted by methyl, ethyl, methoxy, ethoxy, chlorine, carboxyl and/or sulfo, phenyl and phenyl which is substituted by alkyl of 1 to 4 carbon atoms, alkoxy of 1 to 4 carbon atoms, chlorine, carboxyl, and/or sulfo;

Z is a radical of the general formula (3)

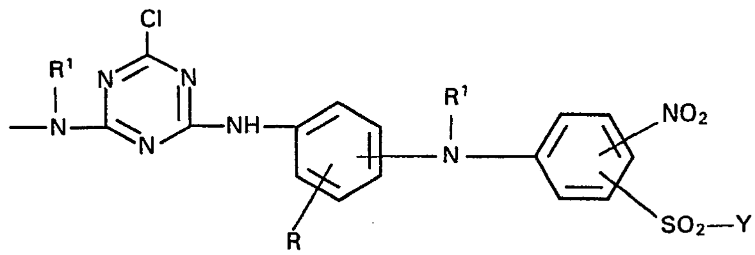

(3)

in which

$R^1$ stands for a hydrogen atom or an alkyl group of 1 to 4 carbon atoms, optionally substituted by one or two substituents from the group acetylamino, hydroxyl, sulfato, alkoxy of 1 to 4 carbon atoms, sulfo and carboxyl, where the two $R^1$s can be identical to or different from each other,

R denotes a hydrogen atom or a sulfo group and

Y is the vinyl group or a β-thiosulfatoethyl, β-phosphatoethyl, β-chloroethyl or β-sulfatoethyl group.

2. The compound as claimed in claim 1 of the general formula (1), in which K and Z have the meanings mentioned in claim 1 and

A is the phenyl radical which may be substituted by 1 or 2 substituents which belong to the group of substituents consisting of alkyl of 1 to 4 carbon atoms, alkoxy of 1 to 4 carbon atoms, carboxyl, alkanoylamino of 2 to 5 carbon atoms, benzoylamino, phenylamino, sulfophenylamino, carbamoyl, carbamoyl which is monosubstituted or disubstituted by alkyl of 1 to 4 carbon atoms, sulfamoyl, sulfamoyl which is monosubstituted or disubstituted by alkyl of 1 to 4 carbon atoms, N-phenylsulfamoyl, N-phenyl-N-($C_1$-$C_4$-alkyl)-sulfamoyl, cyano, nitro, chlorine, bromine, fluorine, trifluoromethyl, hydroxyl and sulfo, or

A is a naphthyl radical which can be substituted by 1, 2 or 3 substituents which belong to the group of substituents consisting of sulfo, carboxyl, methyl, ethyl, methoxy, ethoxy, alkanoylamino of 2 to 5 carbon atoms, benzoylamino, chlorine, hydroxyl and nitro.

3. The compound as claimed in claim 1, wherein A is the phenyl radical which is substituted by 1 or 2 substituents from the group consisting of alkyl of 1 to 4 carbon atoms, alkoxy of 1 to 4 carbon atoms, chlorine, carboxy and sulfo, at least one of these substituents being a sulfo group, or is a naphthyl radical which is substituted by 1, 2 or 3 sulfo groups.

4. The compound as claimed in claim 1, wherein A is a radical of the general formula (2)

$$D - N = N - E - \qquad (2)$$

in which D denotes the phenyl radical which is substituted by 1 or 2 substituents from the group consisting of alkyl of 1 to 4 carbon atoms, alkoxy of 1 to 4 carbon atoms, chlorine, carboxyl and sulfo, at least one of these substituents being a sulfo group, or is a naphthyl radical which is substituted by 1, 2 or 3 sulfo groups, and E denotes a 1-hydroxynaphthylene radical which contains the azo radical D-N=N- bonded in the 2-position and is substituted by 1 or 2 sulfo groups, or is the 1,4-phenylene radical which can be substituted by an amino group, an alkylamino group of 1 to 4 carbon atoms, an alkanoylamino group of 2 to 5 carbon atoms, a methyl, ethyl, carboxyl, sulfo or ureido group or a chlorine atom or by one of these substituents and by a methyl, ethyl, methoxy, ethoxy or sulfo group or a chlorine atom, or is a 1,4-naphthylene radical which can be substituted by an alkanoylamino group of 2 to 5 carbon atoms or a benzoylamino group and/or 1 or 2 sulfo groups.

5. The compound as claimed in claim 1, wherein A or D denotes a monosulfophenyl or disulfophenyl or a monosulfonaphthyl, disulfonaphthyl or trisulfonaphthyl radical or a benzene radical of the general formula (4)

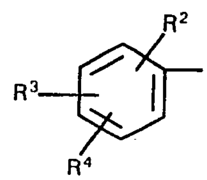

(4)

in which

$R^2$ denotes a bromine atom, a nitro group or an alkanoylamino group of 2 to 5 carbon atoms, a hydrogen atom, an alkyl group of 1 to 4 carbon atoms, an alkoxy group of 1 to 4 carbon atoms, a chlorine atom or a carboxyl group,

$R^3$ is a bromine atom or a hydroxyl group, a hydrogen atom, an alkyl group of 1 to 4 carbon atoms, an alkyoxy group of 1 to 4 carbon atoms, a chlorine atom or a sulfo group and

$R^4$ denotes a hydrogen atom or a sulfo group.

6. The compound as claimed in any one of claims 1 to 5, wherein $R^1$ is a hydrogen atom or a methyl group or ethyl group.

7. The compound as claimed in claim 1 conforming to the general formula

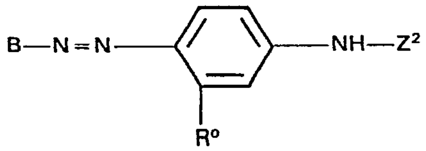

(12)

in which

B is a monosulfophenyl, a disulfophenyl, a monosulfo-2-naphthyl, a disulfo-2-naphthyl or a trisulfo-2-naphthyl radical or a radical of the general formula (4) mentioned and defined in claim 5,

R° denotes a hydrogen atom, a chlorine or bromine atom, an amino group, an alkanoylamino group of 2 to 5 carbon atoms, a sulfo, carboxyl, methyl, ethyl, methoxy or ureido group and

$Z^2$ is a radical of the general formula (3b)

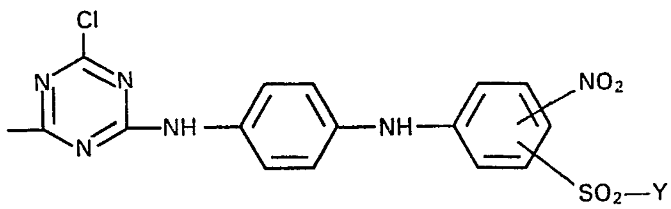

(3b)

in which Y has the meaning mentioned in claim 1 and the group $-SO_2-Y$ and the nitro group are bonded to the benzene nucleus in the meta-position relative to each other, but neither is simultaneously in the ortho-position relative to the amino group.

8. The compound as claimed in claim 1, 2, 3 or 4, wherein Z is a radical of the general formula

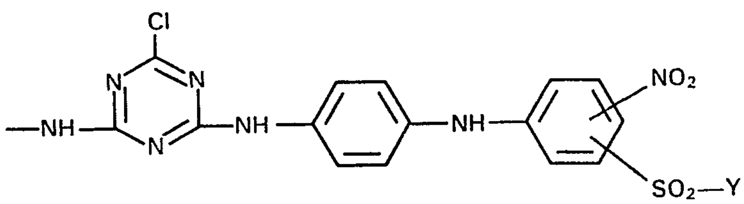

in which Y has the meaning mentioned in claim 1 and the group $-SO_2-Y$ and the nitro group are bonded to the benzene nucleus in the meta-position relative to each other, but neither is simultaneously in the ortho-position relative to the amino group.

9. The compound as claimed in claim 1 of the general formula

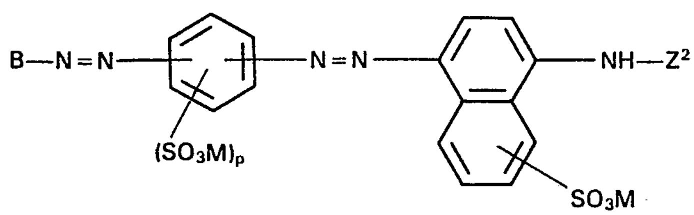

in which B and $Z^2$ have the meanings mentioned in claim 7, M is a hydrogen atom or an alkali metal and p stands for the number zero, 1 or 2.

10. The compound as claimed in claim 1 of the general formula

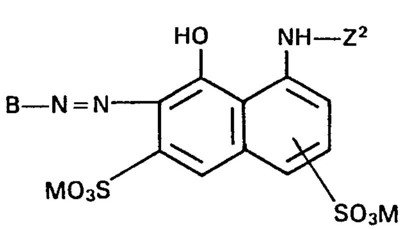

in which B and $Z^2$ have the meanings mentioned in claim 7 and M stands for a hydrogen atom or an alkali metal.

11. The compond as claimed in claim 1 of the general formula

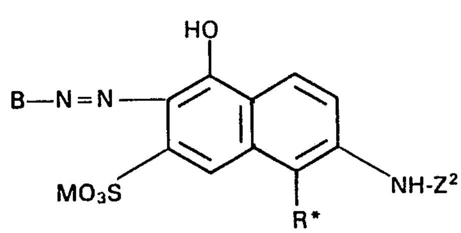

in which B and $Z^2$ have the meanings mentioned in claim 7, M stands for a hydrogen atom or an alkali metal and R* is a hydrogen atom or a sulfo group.

12. The compound as claimed in claim 1 of the general formula

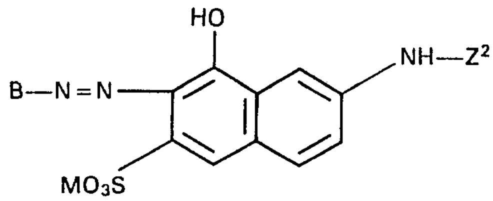

in which B and $Z^2$ have the meanings mentioned in claim 7 and M stands for a hydrogen atom or an alkali metal.

13. The compound as claimed in claim 1 of the general formula

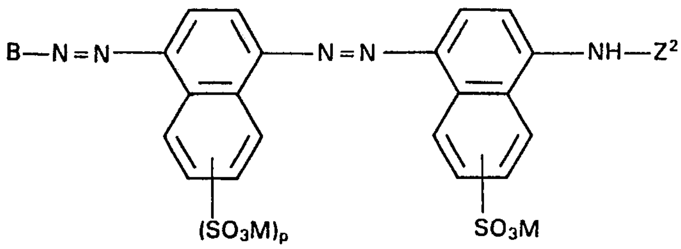

in which B and $Z^2$ have the meanings mentioned in claim 7, M stands for a hydrogen atom or an alkali metal and p is the number zero, 1 or 2.

14. The compound as claimed in any of claims 1 to 13, wherein Y stands for the vinyl group or the β-sulfatoethyl group.

15. A process for preparing the compounds mentioned and defined in claim 1 of the general formula (1), which comprises reacting a compound of the general formula (5)

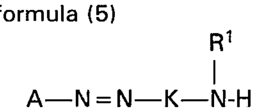

(5)

where A, K and $R^1$ have the meanings mentioned in claim 1 with a dichlorotriazine compound of the general formula (6)

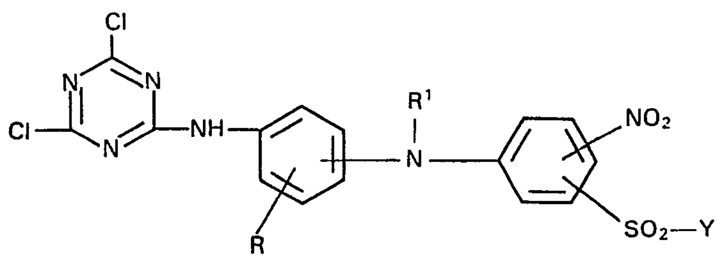

(6)

in which $R^1$, R and Y have the meanings mentioned in claim 1, by elimination of 1 mole of hydrogen chloride, or reacting a compound of the general formula (7)

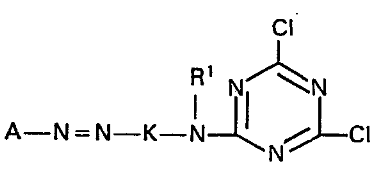

(7)

where A, K and $R^1$ have the meaning mentioned in claim 1 with an aminodiphenylamine compound of the general formula (8)

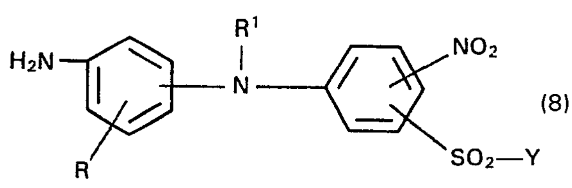

(8)

in which $R^1$, R and Y have the meanings mentioned in claim 1, by elimination of 1 mole of hydrogen chloride,
or coupling a diazonium compound of an amine of the general formula $A\text{-}NH_2$ where A has the meaning mentioned in claim 1 with a couplable compound of the general formula H-K-Z where K and Z have the meaning mentioned in claim 1.

16. Use of the compounds mentioned and defined in claim 1 ot the general formula (1) or of compounds of the general formula (1) prepared in claim 15, as dyes.

17. The use as claimed in claim 16 for dyeing (coloring) hydroxyl- and/or carboxamido-containing material, in particular fiber material.

18. A process for dyeing (coloring) hydroxyl- and/or carboxamido-containing material, preferably fiber material, by putting a dye onto or into the material and fixing it by means of heat and/or in the presence of an acid-binding agent, which comprises using as the dye a compound of the general formula (1) mentioned and defined in claim 1 or a compound of the general formula (1) prepared as claimed in claim 15.

**Revendications**

1. Composé azoïque soluble dans l'eau qui répond à la formule générale (1):

$$A — N = N — K — Z \qquad (1)$$

dans laquelle:

A représente un radical phényle qui peut porter des substituants pris dans l'ensemble constitué par les alkyles en $C_1$-$C_4$, les alcoxy en $C_1$-$C_4$, le carboxy, les alcanoylamino en $C_2$-$C_5$ éventuellement porteurs d'un chlore, d'un brome, d'un sulfo, d'un sulfato, d'un carboxy et/ou d'un hydroxy, le benzoylamino, les sulfobenzoylamino, le phénylamino, les sulfophénylamino, le carbamoyle, les carbamoyles porteurs d'un ou de deux alkyles en $C_1$-$C_4$, le sulfamoyle, les sulfamoyles porteurs d'un ou de deux alkyles en $C_1$-$C_4$, le N-phényl-sulfamoyle, les N-phényl-N-($C_1$-$C_4$-alkyl)-sulfamoyles, le cyano, le nitro, le chlore, le brome, le fluor, le trifluorométhyle, l'hydroxy et le sulfo, ou

A représente un radical naphthyle qui peut porter des substituants pris dans l'ensemble constitué par le sulfo, le carboxy, le méthyle, l'éthyle, le méthoxy, l'éthoxy, les alcanoylamino en $C_2$-$C_5$ éventuellement porteurs d'un chlore, d'un brome, d'un sulfo, d'un sulfato, d'un carboxy et/ou d'un hydroxy, le benzoylamino, les sulfobenzoylamino, le chlore, l'hydroxy et le nitro, ou

A représente un radical répondant à la formule générale (2):

$$D — N = N — E — \qquad (2)$$

dans laquelle:

D représente un radical phényle qui peut porter des substituants pris dans l'ensemble constitué par les alkyles en $C_1$-$C_4$, les alcoxy en $C_1$-$C_4$, le carboxy, les alcanoylamino en $C_2$-$C_5$ éventuellement porteurs d'un chlore, d'un brome, d'un sulfo, d'un sulfato, d'un carboxy et/ou d'un hydroxy, le benzoylamino, les sulfobenzoylamino, le phénylamino, les sulfophénylamino, le carbamoyle, les carbamoyles porteurs d'un ou de deux alkyles en $C_1$-$C_4$, le sulfamoyle, les sulfamoyles porteurs d'un ou de deux alkyles en $C_1$-$C_4$, le N-phénylsulfamoyle, les N-phényl-N-($C_1$-$C_4$-alkyl)-sulfamoyles, le cyano, le nitro, le chlore, le brome, le fluor, le trifluorométhyle, l'hydroxy et le sulfo, ou

D représente un radical naphthyle qui peut porter des substituants pris dans l'ensemble constitué par le sulfo, le carboxy, le méthyle, l'éthyle, le méthoxy, l'éthoxy, les alcanoylamino en $C_2$-$C_5$ éventuellement porteurs d'un chlore, d'un brome, d'un sulfo, d'un sulfato, d'un carboxy et/ou d'un hydroxy, le benzoylamino, les sulfobenzoylamino, le chlore, l'hydroxy et le nitro, et

E représente le radical d'un composé copulable et diazotable qui, dans la synthèse des composés (1), sert d'abord de composante de copulation, puis de composante de diazotation et est:

— un radical phénylène qui peut porter un ou deux substituants pris dans l'ensemble constitué par 2 alkyles en $C_1$-$C_4$, 2 alcoxy en $C_1$-$C_4$, 2 chlores, 1 brome, 1 alcanoylamino en $C_2$-$C_5$ éventuellement porteur d'un chlore, d'un brome, d'un sulfo, d'un sulfato, d'un carboxy et/ou d'un hydroxy, 1 benzoylamino, 2 sulfo, 1 carboxy, 1 N,N-dialkylamino dont les alkyles contiennent chacun de 1 à 4 atomes de carbone, 1 uréido, 1 phényluréido, et 1 alkylsulfonylamino en $C_1$-$C_4$, ou

— un radical naphthylène qui peut porter un ou deux radicaux sulfo ou un radical alkyle en $C_1$-$C_4$, un radical nitro, un radical alcanoylamino en $C_2$-$C_5$ ou un radical benzoylamino, ou un ou deux radicaux sulfo et un radical alkyle en $C_1$-$C_4$, un radical nitro, un radical alcanoylamino en $C_2$-$C_5$ ou un radical benzoylamino, ou

— un radical naphthylène qui porte, en position ortho par rapport au groupe azo du radical de formule (2), un radical amino, un radical alkylamino en $C_1$-$C_4$, un radical phénylamino éventuellement porteur d'un chlore, d'un alkyle en $C_1$-$C_4$, d'un alcoxy en $C_1$-$C_4$, d'un sulfo et/ou d'un carboxy, ou un radical hydroxy, et qui peut en outre porter un ou deux radicaux sulfo ou un radical alkyle en $C_1$-$C_4$, un radical nitro, un radical alcanoylamino en $C_2$-$C_5$ ou un radical benzoylamino ou sulfobenzoylamino, ou un ou deux radicaux sulfo et un radical alkyle en $C_1$-$C_4$, un radical nitro, un radical alcanoylamino en $C_2$-$C_5$ ou un radical benzoylamino ou sulfobenzoylamino,

K représente un radical hydroxyl-1 naphthylène qui porte le groupe azo en position 2, ou un radical hydroxy-2 naphtylène qui porte le groupe azo en position 1, chacun de ces radicaux pouvant porter un ou deux radicaux sulfo ou un radical alcanoylamino en $C_2$-$C_5$ éventuellement porteur d'un chlore, d'un brome, d'un sulfo, d'un sulfato, d'un carboxy et/ou d'un hydroxy ou un radical benzoylamino, ou un radical alcanoylamino en $C_2$-$C_5$ éventuellement porteur d'un chlore, d'un brome, d'un sulfo, d'un sulfato, d'un carboxy et/ou d'un hydroxy ou un radical benzoylamino et un ou deux radicaux sulfo, ou

K représente un radical naphtylène qui peut porter un ou deux radicaux sulfo ou un ou deux radicaux sulfo et un radical amino éventuellement porteur d'un ou de deux substituants pris dans l'ensemble constitué par les alkyles en $C_1$-$C_4$, les hydroxyalkyles en $C_1$-$C_4$, les carboxyalkyles en $C_2$-$C_5$, les sulfoalkyles en $C_1$-$C_4$, les sulfatoalkyles en $C_1$-$C_4$, les cyanoalkyles en $C_2$-$C_5$, les alcoxycarbonylalkyles dont les alkyles contiennent chacun de 1 à 4 atomes de carbone, les phénylalkyles dont l'alkyle contient de 1 à 4 atomes de carbone et dont le phényle est éventuellement porteur d'un méthyle, d'un éthyle, d'un méthoxy, d'un éthoxy, d'un chlore, d'un sulfo et/ou d'un carboxy, le phényle et les phényles porteurs d'un alkyle en $C_1$-$C_4$, d'un alcoxy en $C_1$-$C_4$, d'un chlore, d'un carboxy et/ou d'un sulfo, ou

K représente un radical amino-1 naphtylène qui porte le groupe azo en position 2, ou un radical amino-2 naphtylène qui porte le groupe azo en position 1, chacun de ces deux radicaux amino-naphtylènes pouvant porter un ou deux radicaux sulfo ou un radical hydroxy en position 5, 6, 7 ou 8, ou ce radical hydroxy et un ou deux radicaux sulfo, ou

K représente un radical phénylène pui peut porter un ou deux substituants pris dans l'ensemble suivant: 2 alkyles en $C_1$-$C_4$, 2 alcoxy en $C_1$-$C_4$, 2 chlores, 1 brome, 1 alcanoylamino en $C_2$-$C_5$ éventuellement porteur d'un chlore, d'un brome, d'un sulfo, d'un sulfato, d'un carboxy et/ou d'un hydroxy, 1 benzoylamino, 1 sulfo, 1 carboxy, 1 uréido, 1 phényluréido, 1 alkylsulfonylamino en $C_1$-$C_4$, 1 amino et 1 amino porteur d'un ou deux substituants pris dans l'ensemble constitué par les alkyles en $C_1$-$C_4$, les hydroxyalkyles en $C_1$-$C_4$, les carboxyalkyles en $C_2$-$C_5$, les sulfoalkyles en $C_1$-$C_4$, les sulfatoalkyles en $C_1$-$C_4$, les cyanoalkyles en $C_2$-$C_5$, les alcoxycarbonylalkyles dont les alkyles contiennent chacun de 1 à 4 atomes de carbone, les phénylalkyles dont l'alkyle contient de 1 à 4 atomes de carbone et dont le phényle est éventuellement porteur d'un méthyle, d'un éthyle, d'un méthoxy, d'un éthoxy, d'un chlore, d'un carboxy et/ou d'un sulfo, le phényle et les phényles porteurs d'un alkyle en $C_1$-$C_4$, d'un alcoxy en $C_1$-$C_4$, d'un chlore, d'un carboxy et/ou d'un sulfo, et

Z représente un radical répondant à la formule générale (3):

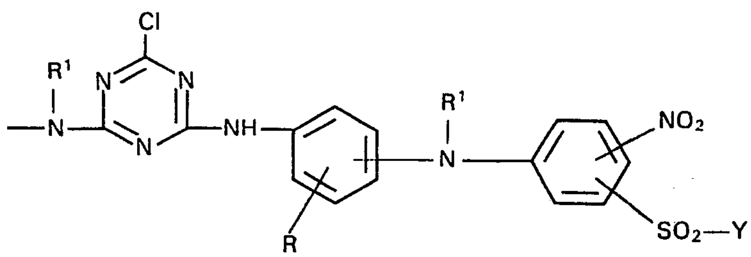

(3)

dans laquelle:

$R^1$ représente un atome d'hydrogène ou un radical alkyle en $C_1$-$C_4$ qui porte éventuellement un ou deux substituants pris dans l'ensemble constitué par l'acétylamino, l'hydroxy, le sulfato, les alcoxy en $C_1$-$C_4$, le sulfo et le carboxy, les deux symboles $R^1$ pouvant avoir, l'un par rapport à l'autre, la même signification ou des significations différentes,

R représente un atome d'hydrogène ou un radical sulfo et

Y représente un radical vinyle, thiosulfato-2 éthyle, phosphato-2 éthyle, chloro-2 éthyle ou sulfato-2 éthyle.

2. Composé selon la revendication 1 qui répond à la formule générale (1) dans laquelle:

K et Z ont les significations données à la revendication 1 et

A représente un radical phényle qui peut porter un ou deux substituants pris dans l'ensemble constitué par les alkyles en $C_1$-$C_4$, les alcoxy en $C_1$-$C_4$, le carboxy, les alcanoylamino en $C_2$-$C_5$, le benzoylamino, le phénylamino, les sulfophénylamino, le carbamoyle, les carbamoyles porteurs d'un ou de deux alkyles en $C_1$-$C_4$, le sulfamoyle, les sulfamoyles porteurs d'un ou de deux alkyles en $C_1$-$C_4$, le N-phény-sulfamoyle, les N-phényl-N-($C_1$-$C_4$-alkyl)-sulfamoyles, le cyano, le nitro, le chlore, le brome, le fluor, le trifluorométhyle, l'hydroxy et le sulfo, ou

A représente un radical naphthyle qui peut porter 1, 2 ou 3 substituants pris dans l'ensemble constitué par le sulfo, le carboxy, le méthyle, l'éthyle, le méthoxy, l'éthoxy, les alcanoylamino en $C_2$-$C_5$, le benzoylamino, le chlore, l'hydroxy et le nitro.

3. Composé selon la revendication 1 caractérisé en ce que A représente un radical phényle porteur d'un ou de deux substituants pris dans l'ensemble constitué par les alkyles en $C_1$-$C_4$, les alcoxy en $C_1$-$C_4$, le chlore, le carboxy et le sulfo, au moins l'un des ces substituants étant un radical sulfo, ou représente un radical naphtyle qui porte un, deux ou trois radicaux sulfo.

4. Composé selon la revendication 1 caractérisé en ce que A représente un radical répondant à la formule générale (2):

$$D - N = N - E - \qquad (2)$$

dans laquelle:

D représente un radical phényle qui porte un ou deux substituants pris dans l'ensemble constitué par les alkyles en $C_1$-$C_4$, les alcoxy en $C_1$-$C_4$, le chlore, le carboxy et le sulfo, au moins l'un de ces substituants étant un radical sulfo, ou représente un radical naphtyle qui porte un, deux ou trois radicaux sulfo, et

E représente un radical hydroxy-1 naphtylène qui est lié au radical azo D-N=N- par la position 2 et

qui porte un ou deux radicaux sulfo, ou représente un radical phénylène-1,4 qui peut porter un radical amino, un radical alkylamino en $C_1$-$C_4$, un radical alcanoylamino en $C_2$-$C_5$, un radical méthyle, éthyle, carboxy, sulfo ou uréido ou un atome de chlore ou l'un de ces substituants et un radical méthyle, éthyle, méthoxy, éthoxy ou sulfo ou un atome de chlore, ou représente un radical naphtylène-1,4 qui peut porter un radical alcanoylamino en $C_2$-$C_5$ ou un radical benzoylamino et/ou un ou deux radicaux sulfo.

5. Composé selon la revendication 1 caractérisé en ce que A ou D représente un radical monosulfo- ou disulfophényle ou un radical monosulfo-, disulfo- ou trisulfo-naphtyle ou un radical benzénique répondant à la formule générale (4):

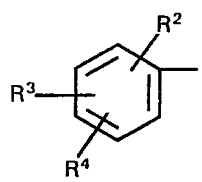

(4)

dans laquelle:

$R^2$ représente un atome de brome, un radical nitro, un radical alcanoylamino en $C_2$-$C_5$, un atome d'hydrogène, un radical alkyle en $C_1$-$C_4$, un radical alcoxy en $C_1$-$C_4$, un atome de chlore ou un radical carboxy,

$R^3$ représente un atome de brome, un radical hydroxy, un atome d'hydrogène, un radical alkyle en $C_1$-$C_4$, un radical alcoxy en $C_1$-$C_4$, un atome de chlore ou un radical sulfo et

$R^4$ représente un atome d'hydrogène ou un radical sulfo.

6. Composé selon l'une quelconque res revendications 1 à 5, caractérisé en ce que $R^1$ représente un atome d'hydrogène ou un radical méthyle ou éthyle.

7. Composé selon la revendication qui répond à la formule générale (12):

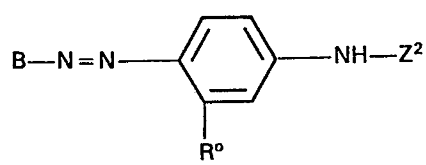

(12)

dans laquelle:

B représente un radical monosulfophényle, disulfophényle, monosulfo-naphtyle-2, disulfo-naphtyle-2 ou trisulfo-naphtyle-2 ou un radical répondant à la formule (4) qui a été représentée et définie à la revendication 5,

$R^o$ représente un atome d'hydrogène, de chlore ou de brome, un radical amino, un radical alcanoylamino en $C_2$-$C_5$, ou un radical sulfo, carboxy, méthyle, éthyle, méthoxy ou uréido et

$Z^2$ représente un radical répondant à la formule générale (3b):

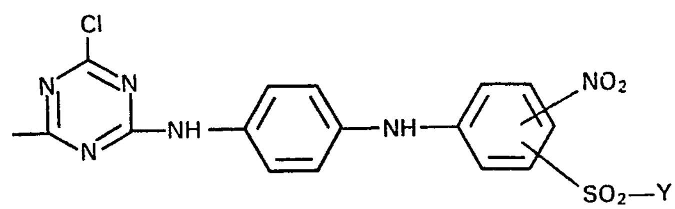

(3b)

dans laquelle Y a la signification qui lui a été donnée à la revendication 1 et les radicaux $-SO_2$-Y et nitro sont en position méta l'un par rapport à l'autre sur le noyau benzénique, ces deux radicaux ne devant cependant pas se trouver en même temps en position ortho par rapport au radical amino.

8. Composé selon l'une quelconque des revendications 1, 2, 3 et 4, caractérisé en ce que Z représente un radical répondant à la formule générale suivante:

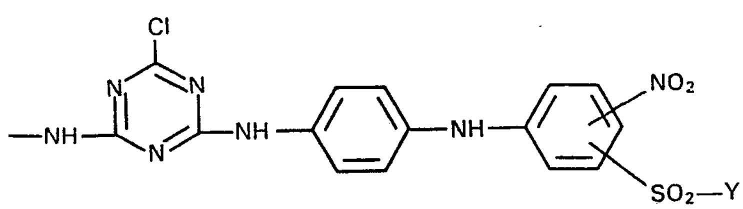

dans laquelle Y a la signification qui lui a été donnée à la revendication 1 et les radicaux $-SO_2$-Y et nitro sont en position méta l'un par rapport à l'autre sur le noyau benzénique, ces deux radicaux ne se trouvant cependant pas en même temps en position ortho par rapport au radical amino.

9 Composé selon la revendication 1 qui répond à la formule générale suivante:

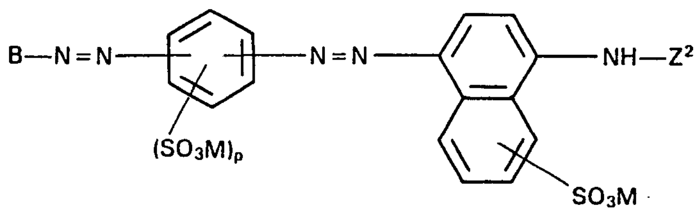

dans laquelle B et $Z^2$ ont les significations données à la revendication 7, M représente un atome d'hydrogène ou un métal alcalin, et p désigne un nombre égal à 0, à 1 ou à 2.

10. Composé selon la revendication 1 qui répond à la formule suivante:

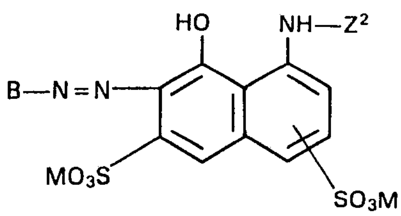

dans laquelle B et $Z^2$ ont les significations données à la revendication 7 et M représente un atome d'hydrogène ou un métal alcalin.

11. Composé selon la revendication 1 qui répond à la formule générale suivante:

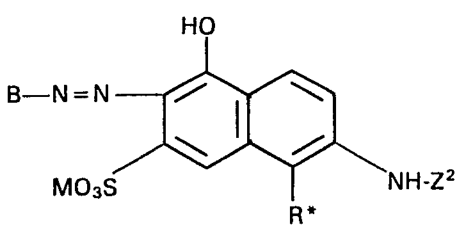

dans laquelle B et $Z^2$ ont les significations données à la revendication 7, M représente un atome d'hydrogène ou un métal alcalin et R* représente un atome d'hydrogène ou un radical sulfo.

12. Composé selon la revendication 1 qui répond à la formule générale suivante:

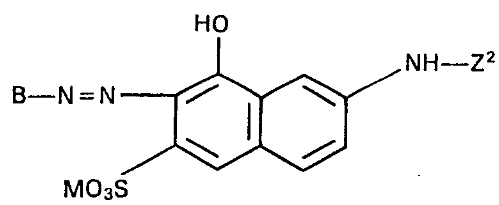

dans laquelle B et $Z^2$ ont les significations données à la revendication 7 et M représente un atome d'hydrogène ou un métal alcalin.

13. Composé selon la revendication 1 qui répond à la formule générale suivante:

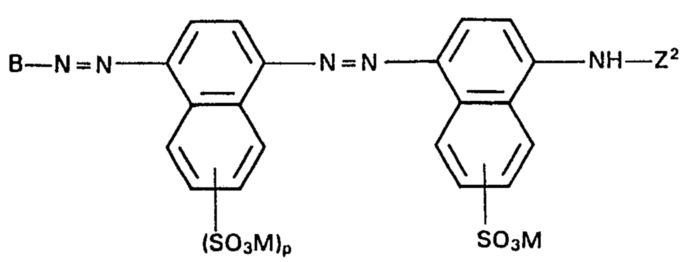

dans laquelle B et $Z^2$ ont les significations données à la revendication 7, M représente un atome d'hydrogène ou un métal alcalin, et p désigne un nombre égal à 0, à 1 ou à 2.

14. Composé selon l'une quelconque des revendications 1 à 13, caractérisé en ce que Y représente un radical vinyle ou un radical sulfato-2 éthyle.

15. Procédé pour préparer les composés répondant à la formule générale (1) qui à été représentée et définie à la revendication 1, procédé caractérisé en ce qu'on fait réagir, avec enlèvement d'une mole de chlorure d'hydrogène, un composé répondant à la formule générale (5):

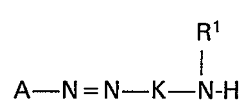

(5)

dans laquelle A, K et $R^1$ ont les significations données à la revendication 1, avec un composé dichlorotriazinique répondant à la formule générale (6):

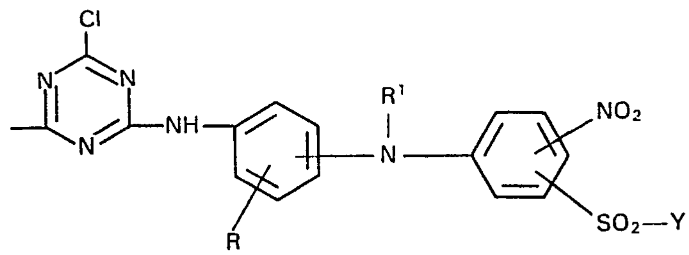

(6)

dans laquelle $R^1$, R et Y one les significations données à la revendication 1,
ou on fait réagir, avec enlèvement d'une mole de chlorure d'hydrogène, un composé répondant à la formule générale (7):

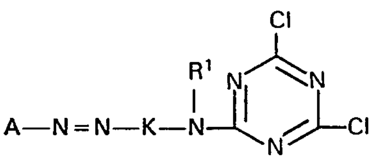

(7)

dans laquelle A, K et $R^1$ ont les significations données à la revendication 1, avec une amino-diphénylamine répondant à la formule générale (8):

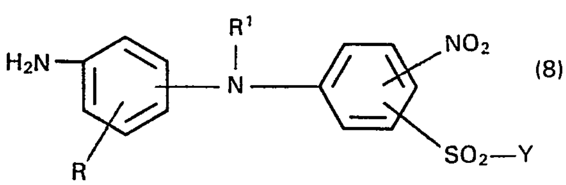

(8)

dans laquelle $R^1$, R et Y ont les significations données à la revendication 1,
ou on copule un diazoïque d'une amine répondant à la formule générale $A\text{-}NH_2$ dans laquelle A a la signification donnée à la revendication 1, avec un composé copulable répondant à la formule générale H-K-Z dans laquelle K et Z ont les significations données à la revendication 1.

16. Application des composés de formule générale (1) selon la revendication 1, ou des composés de formule générale (1) préparés selon la revendication 15, comme colorants.

17. Applications selon la revendication 16 pour la teinture (coloration) de matières contenant des radicaux hydroxy et/ou des radicaux carbamoyles, plus particulièrement de matières fibreuses de ce genre.

18. Procédé pour teindre (colorer) des matières contenant des radicaux hydroxy et/ou des radicaux carbamoyles, de préférence des matières fibreuses de ce genre, dans lequel on applique un colorant sur la matière, ou on introduit un colorant dans la matière, et on le fixe par la chaleur et/ou en présence d'un accepteur d'acides, procédé caractérisé en ce qu'on utilise comme colorant un composé répondant à la formule générale (1) qui à été représentée et définie à la revendication 1 ou un composé de formule générale (1) qui à été préparé selon la revendication 15.